# EUROPÄISCHE PATENTSCHRIFT

(11) **EP 3 795 853 B1**
(45) Veröffentlichungstag und Bekanntmachung des Hinweises auf die Patenterteilung: **12.05.2021**
(21) Anmeldenummer: 19212274.5
(22) Anmeldetag: 28.11.2019
(51) Int. Cl.: F16D 65/12

(54) **SCHIENENRAD UMFASSEND EINE BREMSSCHEIBE MIT EINEM SEGMENTIERTEN REIBRING**
RAIL WHEEL COMPRISING A BRAKE DISC WITH A SEGMENTED FRICTION RING
ROUE FERROVIAIRE COMPRENANT UN DISQUE DE FREIN DOTÉ D'UNE BAGUE DE FRICTION SEGMENTÉE

(30) Priorität: 19.09.2019 EP 19198434
(43) Veröffentlichungstag der Anmeldung: 24.03.2021
(73) Patentinhaber: Faiveley Transport Witten GmbH, 58454 Witten (DE)
(72) Erfinder: Montua, Sebastian, 58454 Witten (DE); Radtke, Norbert, 58454 Witten (DE); Schulte-Farwig, Lasse, 58454 Witten (DE); Beckmann, Wolfgang, 58454 Witten (DE)
(74) Vertreter: RGTH

(56) Entgegenhaltungen:
- EP-A2- 2 702 293
- DE-A1- 2 819 832
- GB-A- 1 348 976
- US-A- 5 788 026
- US-A1- 2016 076 613

## Beschreibung

Die vorliegende Erfindung betrifft ein Schienenrad für ein Schienenfahrzeug umfassend eine Bremsscheibe, wobei die Bremsscheibe mindestens einen Reibring mit einer Reibfläche umfasst, wobei der mindestens eine Reibring mindestens zwei Ringsegmente umfasst. Ferner betrifft die vorliegende Erfindung eine Bremsscheibe für ein Schienenrad, ein Ringsegment für eine Bremsscheibe und ein Verbindungsmittel für ein Schienenrad.

### Technologischer Hintergrund

Zur Verzögerung eines Schienenfahrzeuges umfassen die Schienenräder von Schienenfahrzeugen Bremsscheiben mit mindestens einem Reibring mit einer Reibfläche. Der Reibring ist an einer Seite des Schienenrads, insbesondere an einem Steg eines Schienenrads, befestigt. Durch Betätigung eines Bremszylinders werden Bremsbeläge an die Reibfläche des Reibrings angelegt, wodurch als Produkt von resultierender Bremskraft und Hebellänge zur Radachse ein Bremsmoment aufgebracht wird. Die Aufgabe der Bremsscheibe besteht in der Übertragung des Bremsmoments auf das Schienenrad, sodass das Schienenfahrzeug verzögert wird.

Durch das Reiben des Bremsbelags an dem Reibring der Bremsscheibe entsteht thermische Energie, welche von der Bremsscheibe abgeführt werden muss. Die thermische Energie hat zur Folge, dass der Reibring sich thermisch ausdehnt. Diese thermische Ausdehnung kann zu einer sogenannten Schirmung des Reibrings führen. In diesem Zusammenhang ist es im Stand der Technik bekannt, segmentierte Reibringe bei Bremsscheiben für Schienenfahrzeuge vorzusehen. Die segmentierten Reibringe umfassen mehrere Ringsegmente, welche sich unter einer thermischen Belastung ausdehnen können.

Aus der WO 2010/108671 A1 ist eine Bremsscheibe bekannt, welche aus einer Mehrzahl von Segmenten zusammengesetzt ist, wobei die Segmente beiderseits eines Rads oder einer Befestigungsscheibe gegenüberliegend angeordnet sind und miteinander mittels zumindest eines Befestigungsmittels in einem Befestigungsbereich miteinander und mit dem Rad oder mit der Befestigungsscheibe befestigt sind. Zur Zentrierung und Befestigung jedes Segments ist zumindest ein Festlager und mindestens ein Loslager vorgesehen, wobei das Loslager so ausgebildet und angeordnet ist, dass eine nicht-radiale Ausdehnung des Segments zugelassen wird.

Aus der EP 0 616 143 A1 ist eine Bremsscheibe für Scheibenbremsen für Schienenfahrzeuge bekannt, wobei die Bremsscheibe einen in Stoßstellen in Ringsegmente unterteilten Reibring aufweist. Der Reibring ist auf seiner beaufschlagungsabgewandten Seite an jeder Stoßstelle mit einer Ringnut versehen, welche die Stoßstelle symmetrisch überbrückend angeordnet ist. In den Ringnuten befinden sich diese zumindest nahezu ausfüllende Ringkörper, welche die einander gegenüberstehenden Enden der Ringsegmente miteinander verbinden. Durch die Ringkörper wird ein fliehkraftbedingtes Aufweiten der Stoßstellen ebenso wie eine radiale Relativverschiebung der Ringsegmentenden ausgeschlossen, während bei Vorhandensein eines Luftspaltes an den Stoßstellen eine begrenzte Relativdrehung der Stirnflächen und der Ringsegmente möglich ist.

Die DE 2 133 235 A1 offenbart einen Radkörper für Schienenfahrzeuge mit zwei Bremsscheibenringen, welche zwei Halbringe aufweisen. Die Halbringe werden mit jeweils einer achsparallelen Spannhülse ortsfest am Schienenrad gehaltert. Um ein Kippen der Halbringe um die Spannhülsen im Rahmen des Radialspiels zu vermeiden sind die beiden Halbringe mittels Bolzen miteinander verbunden, die sich senkrecht zu einer Teilungsebene zwischen den Halbringen von einem zum anderen Halbring erstrecken.

Die US 2016/0076613 A1 offenbart eine Bremsscheibe für ein Schienenrad. Die Bremsscheibe umfasst mehrere Ringsegmente, welche mittels einer Vielzahl von Verbindungselementen miteinander verbunden sind. Die Verbindungselemente sind spielbehaftet in Aufnahmen in den Stirnseiten der Ringsegmente angeordnet.

Aus der US 5,788,026 A ist eine Bremsscheibe für ein Schienenrad bekannt, welche aus mindestens drei Ringsegmenten besteht. Jedes Ringsegment weist an beiden Stirnseiten je zwei Aufnahmen auf, in die stiftartige Führungsmittel spielbehaftet aufgenommen sind.

Die GB 1 348 976 A offenbart eine segmentierte Bremsscheibe für Schienenräder. Jedes der Segmente der Bremsscheibe weist eine in etwa dreieckige Form auf.

### Darstellung der Erfindung: Aufgabe, Lösung, Vorteile

Der vorliegenden Erfindung liegt die Aufgabe zugrunde, ein Schienenrad für ein Schienenfahrzeug umfassend eine Bremsscheibe mit mindestens einem Reibring bereitzustellen, welche ein vereinfachtes Anbindungskonzept aufweist und eine thermische Ausdehnung des mindestens einen Reibrings gestattet. Ferner ist es Aufgabe der Erfindung eine Bremsscheibe mit einem Reibring und ein Ringsegment für einen Reibring bereitzustellen, mit denen die vorgenannten Vorteile erzielt werden.

Zur Lösung der der Erfindung zugrundeliegenden Aufgabe wird ein Schienenrad für ein Schienenfahrzeug umfassend eine Bremsscheibe vorgeschlagen, wobei die Bremsscheibe mindestens einen Reibring mit einer Reibfläche umfasst, wobei der mindestens eine Reibring mindestens zwei Ringsegmente umfasst, wobei jedes Ringsegment eine erste Stirnseite und eine zweite Stirnseite umfasst, wobei an der ersten Stirnseite jedes Ringsegments mindestens ein Führungsmittel angeordnet ist und wobei in der zweiten Stirnseite jedes Ringsegments mindestens eine Führungsmittelaufnahme angeordnet ist, wobei jedes Ringsegment mit der ersten Stirnseite an der zweiten Stirnseite eines benachbarten Ringsegments derart angeordnet ist, dass das mindestens eine Führungsmittel jedes Ringsegments in der mindestens einen Führungsmittelaufnahme des benachbarten Ringsegments angeordnet ist, wobei ferner vorgesehen ist, dass das mindestens eine Führungsmittel jedes Ringsegments fest an der ersten Stirnseite angeordnet ist und dass das mindestens eine Führungsmittel jedes Ringsegments spielbehaftet in der mindestens einen Führungsmittelaufnahme der zweiten Stirnseite des benachbarten Ringsegments angeordnet ist.

Die Bremsscheibe des Schienenrads weist mindestens einen Reibring mit einer Reibfläche auf. Der mindestens eine Reibring kann auf einer Seite, insbesondere auf einer Außenseite, des Schienenrads, angeordnet sein. Es ist auch möglich, dass die Bremsscheibe zwei Reibringe umfasst, wobei die Reibringe beidseitig des Schienenrads angeordnet sind.

Der mindestens eine Reibring ist in mindestens zwei Ringsegmente unterteilt, wobei jedes der Ringsegmente eine erste Stirnfläche und eine zweite Stirnfläche aufweist. Jedes Ringsegment ist mit dessen ersten Stirnfläche an der zweiten Stirnfläche eines benachbarten Ringsegments angeordnet.

Bevorzugt ist jedem Führungsmittel eine Führungsmittelaufnahme zugeordnet.

Das mindestens eine Führungsmittel jedes Ringsegments ist fest an dessen ersten Stirnseite angeordnet. Durch die spielbehaftete Anordnung des mindestens einen Führungsmittels in der dem Führungsmittel zugeordneten, mindestens einen Führungsmittelaufnahme der zweiten Stirnfläche des jeweils benachbarten Ringsegments können sich die Ringsegmente unter thermischer Belastung ausdehnen. Zur Zentrierung des Reibrings gleiten die Führungsmittel der Ringsegmente bei der thermischen Ausdehnung in den Führungsmittelaufnahmen des jeweils benachbarten Ringsegments. Um eine ausreichende Ausdehnung zu ermöglichen, kann im thermisch unbelasteten Zustand zwischen der ersten Stirnseite jedes Ringsegments und der zweiten Stirnseite des benachbarten Ringsegments ein Abstand vorgesehen sein.

Jedes Ringsegment bildet mit dem an der ersten Stirnseite fest angeordneten mindestens einen Führungsmittel eine bauliche Einheit. Da die Ringsegmente des mindestens einen Reibrings identisch ausgebildet sind, weist die Bremsscheibe beziehungsweise der Reibring der Bremsscheibe einen vereinfachten Aufbau auf. Zudem wird die Herstellung der Bremsscheibe beziehungsweise des Reibringes der Bremsscheibe vereinfacht, da die Führungsmittel und die Ringsegmente nicht separat voneinander gehandhabt werden müssen.

Ein weiterer Vorteil der erfindungsgemäß vorgesehenen im Wesentlichen identischen Ringsegmente besteht darin, dass eine gleichmäßige thermische Ausdehnung des Reibrings ermöglicht wird, ohne dass es zu einer Unwucht des Reibrings relativ zum Schienenrad kommt.

Grundsätzlich können an der ersten Stirnseite jedes Ringsegments auch zwei oder mehr Führungsmittel angeordnet sein und es können in der zweiten Stirnseite jedes Ringsegments zwei oder mehr Führungsmittelaufnahmen angeordnet sein. Jedem der Führungsmittel ist dann eine Führungsmittelaufnahme zugeordnet.

Die zwei oder mehr Führungsmittel jedes Ringsegments sind dann in den zwei oder mehr Führungsmittelaufnahmen des benachbarten Ringsegments angeordnet, wobei die Führungsmittel jedes Ringsegments fest an der ersten Stirnseite angeordnet sind und wobei die Führungsmittel jedes Ringsegments spielbehaftet in den Führungsmittelaufnahmen der zweiten Stirnseite des benachbarten Ringsegments angeordnet sind.

Bevorzugt ist die Bremsscheibe des Schienenrads eine Radbremsscheibe.

Bevorzugt ist vorgesehen, dass der mindestens eine Reibring mindestens vier, weiter bevorzugt mindestens sechs, insbesondere bevorzugt mindestens acht, Ringsegmente umfasst.

Weiter bevorzugt ist vorgesehen, dass das mindestens eine Führungsmittel jedes Ringsegments, insbesondere in Richtung der zweiten Stirnseite des benachbarten

Ringsegments, von der ersten Stirnseite hervorsteht und/oder aus der ersten Stirnseite herausragt.

Zudem kann vorgesehen sein, dass das mindestens eine Führungsmittel ein Stift oder ein Bolzen oder ein Kegel oder eine Feder oder eine Rippe ist, und/oder dass das mindestens eine Führungsmittel einen runden, insbesondere kreisförmigen, oder vieleckigen, insbesondere rechteckigen, weiter insbesondere quadratischen, Querschnitt aufweist.

Die Ausgestaltung des mindestens einen Führungsmittels als Stift oder Bolzen oder Kegel ist eine bautechnisch einfache Ausführung, welche gleichzeitig optimale Ergebnisse hinsichtlich der durch das Gleiten der Führungsmittel in den Führungsmittelaufnahmen ermöglichten Zentrierung des Reibrings erzielt.

Mit weiterem Vorteil kann vorgesehen sein, dass die erste Stirnseite jedes Ringsegments mindestens eine Befestigungsaufnahme aufweist, wobei das mindestens eine Führungsmittel in der mindestens einen Befestigungsaufnahme fest angeordnet ist.

Die Führungsmittel können vor der Herstellung der Bremsscheibe beziehungsweise des Reibringes in der jeweiligen Befestigungsaufnahme in der ersten Stirnfläche jedes Ringsegments fest angeordnet werden.

Jedoch ist es grundsätzlich auch möglich, dass das mindestens eine Führungsmittel stoffeinteilig bereits beim Herstellungsvorgang des Ringsegments, beispielsweise in einem Gußverfahren, mit diesem gemeinsam ausgebildet wird.

Die Befestigungsaufnahme kann bevorzugt als Sackloch oder Sackbohrung ausgebildet sein. Weiter bevorzugt umfasst das Sackloch oder die Sackbohrung ein Innengewinde. Mit Vorteil kann vorgesehen sein, dass das mindestens eine Führungsmittel in der mindestens einen Befestigungsaufnahme stoffschlüssig, bevorzugt durch Verschweißen oder Verlöten oder Verkleben, und/oder formschlüssig, bevorzugt mit einer Rastverbindung oder einer Passfederverbindung, und/oder kraftschlüssig, bevorzugt mit einer Schraubverbindung oder einer Presspassung, angeordnet ist.

Besonders vorteilhaft ist, wenn das mindestens eine Führungsmittel mittels einer Presspassung in der jeweiligen Befestigungsaufnahme angeordnet ist. Somit wird das bevorzugt als Stift oder Bolzen oder Kegel ausgebildete Führungsmittel nach der Herstellung des Ringsegments umfassend die Befestigungsaufnahme mit einer Presspassung in die Befestigungsaufnahme eingesetzt, sodass danach das Führungsmittel fest mit dem Ringsegment verbunden ist und als fertige bautechnische Einheit gehandhabt werden kann.

Besonders bevorzugt ist vorgesehen, dass die mindestens eine Führungsmittelaufnahme komplementär zu dem mindestens einen Führungsmittel ausgebildet ist.

Dies bedeutet, dass im Falle eines stiftförmigen Führungsmittels mit einem runden Querschnitt auch die Führungsmittelaufnahme einen runden Querschnitt aufweist. Beispielsweise kann die Führungsmittelaufnahme als Sackloch oder Sackbohrung ausgebildet sein. Weist das Führungsmittel hingegen einen rechteckigen oder quadratischen Querschnitt auf, so ist bevorzugt vorgesehen, dass auch die Führungsmittelaufnahme einen rechteckigen oder quadratischen Querschnitt aufweist. Im Falle einer kegelartigen Ausgestaltung des Führungsmittels ist auch die Führungsmittelaufnahme als kegelförmige Aufnahme in der zweiten Stirnfläche des jeweils benachbarten Ringsegments ausgebildet. Wenn das Führungsmittel als Feder oder Rippe ausgebildet ist, so ist die Führungsmittelaufnahme bevorzugt als Vertiefung oder Nut ausgebildet. Durch die spielbehaftete Anordnung der Feder oder der Rippe in der Vertiefung bzw. der Nut kann dann eine Nut-Federverbindung bereitgestellt werden.

Bevorzugt kann vorgesehen sein, dass das mindestens eine Führungsmittel in der mindestens einen Führungsmittelaufnahme in einer Umfangsrichtung und/oder einer Axialrichtung und/oder einer Radialrichtung des Reibringes spielbehaftet angeordnet ist.

Die Umfangsrichtung des Reibrings verläuft entlang der ringförmigen Ausgestaltung des Reibrings. Die Axialrichtung entspricht im am Schienenrad angeordneten Zustand des Reibrings der Rotationsachse des Schienenrads. Die Radialrichtung verläuft von einem Mittelpunkt des Reibrings radial nach außen.

Das Führungsmittel kann entweder nur in einer der Umfangsrichtung, Axialrichtung oder Radialrichtung spielbehaftet angeordnet sein. Auch ist es möglich, dass das Führungsmittel in einer beliebigen Kombination dieser Richtungen spielbehaftet in der Führungsmittelaufnahme angeordnet ist. Ist das Führungsmittel beispielsweise in allen drei Richtungen spielbehaftet in der Führungsmittelaufnahme angeordnet, so kann dies dadurch ermöglicht werden, dass die Führungsmittelaufnahme zwar zu dem Führungsmittel komplementär ist, jedoch größere Abmessungen als das Führungsmittel aufweist. Beispielsweise kann der Innendurchmesser der Führungsmittelaufnahme bei einem stiftförmigen Führungsmittel größer sein als der Durchmesser des Führungsmittels. Im Falle einer kegelförmigen Führungsmittelaufnahme und einem Kegel als Führungsmittel kann die spielbehaftete Anordnung in allen drei Richtungen dadurch erzielt werden, dass das kegelförmige Führungsmittel im thermisch unbelasteten Zustand der Bremsscheibe nicht vollständig in der Führungsmittelaufnahme angeordnet ist.

Bevorzugt ist jedoch vorgesehen, dass das mindestens eine Führungsmittel nur in der Umfangsrichtung spielbehaftet in der mindestens einen Führungsmittelaufnahme angeordnet ist und kein Spiel in der Radialrichtung und der Axialrichtung aufweist.

Mit Vorteil kann vorgesehen sein, dass der mindestens eine Reibring mit Verbindungsmitteln, insbesondere mit Schrauben oder Bolzen, mit dem Schienenrad, insbesondere mit einem Steg des Schienenrads, verbunden ist.

Der Steg des Schienenrads erstreckt sich zwischen einem Nabensitz und einer Lauffläche des Schienenrads.

Bevorzugt ist vorgesehen, dass jedes Ringsegment mindestens eine erste Durchgangsöffnung, insbesondere eine erste Durchgangsbohrung, aufweist, wobei in der ersten Durchgangsöffnung jedes Ringsegments ein erstes Verbindungsmittel mit Spielpassung angeordnet ist.

Bevorzugt wird durch das mit Spielpassung in der ersten Durchgangsöffnung angeordnete erste Verbindungmittel ein Loslager mit dem Schienenrad bereitgestellt.

Ist beispielsweise das erste Verbindungsmittel als Schraube oder Bolzen ausgebildet, so kann der Durchmesser der ersten Durchgangsöffnung in dem Ringsegment größer sein als der Durchmesser Schafts der Schraube oder des Bolzens. Durch das mit Spielpassung in der ersten Durchgangsöffnung angeordnete erste Verbindungsmittel wird das jeweilige Ringsegment in der Axialrichtung des Schienenrads an dem Schienenrad festgelegt. Gleichzeitig ist jedoch eine Bewegung oder Verschiebung des Ringsegments relativ zum Schienenrad im Bereich des ersten Verbindungmittels, insbesondere im Bereich des Loslagers, möglich. Insbesondere kann sich das jeweilige Ringsegment im Bereich des ersten Verbindungsmittels zumindest tangential zur Umfangsrichtung relativ zum Schienenrad thermisch ausdehnen.

Weiter vorteilhaft kann vorgesehen sein, dass jedes Ringsegment mindestens zwei Durchgangsöffnungen, insbesondere Durchgangsbohrungen, umfasst, wobei in einer zweiten Durchgangsöffnung jedes Ringsegments ein zweites Verbindungsmittel mit Passung angeordnet ist.

Bevorzugt wird durch das ohne Spiel mit Passung in der zweiten Durchgangsöffnung angeordnete zweite Verbindungmittel ein Festlager mit dem Schienenrad bereitgestellt. Insbesondere bevorzugt ist jedes Ringsegment mit einem Loslager und mit einem Festlager an dem Schienenrad, insbesondere an dem Steg des Schienenrads, befestigt.

Bevorzugt weist somit jedes Ringsegment zwei Durchgangsöffnungen auf und jedes Ringsegment ist mittels eines ersten Verbindungsmittels und eines zweiten Verbindungsmittels an dem Schienenrad oder an dem Steg des Schienenrads befestigt. Aufgrund der Spielpassung des ersten Verbindungsmittels in der ersten Durchgangsöffnung wird eine thermische Ausdehnung des Ringsegments gegenüber dem Schienenrad zugelassen. Die Zentrierung des jeweiligen Ringsegments erfolgt durch die Bewegung des in der Führungsmittelaufnahme des benachbarten Ringsegments, insbesondere in der Umfangsrichtung, spielbehaftet angeordneten Führungsmittels.

Mit dem zweiten Verbindungsmittel, welches mit Passung in der zweiten Durchgangsöffnung angeordnet ist, wird das jeweilige Ringsegment an dem Schienenrad beziehungsweise an dem Steg des Schienenrads fixiert. Im Bereich der zweiten Durchgangsöffnung weist das Ringsegment keine Beweglichkeit gegenüber dem Schienenrad auf.

Mit weiterem Vorteil kann vorgesehen sein, dass das Schienenrad, insbesondere der Steg des Schienenrads, für jedes Ringsegment ein der ersten Durchgangsöffnung zugeordnetes erstes Bohrloch und/oder ein der zweiten Durchgangsöffnung zugeordnetes zweites Bohrloch aufweist.

Die Bohrlöcher sind insbesondere zur Aufnahme der Verbindungsmittel ausgebildet, sodass der mindestens eine Reibring der Bremsscheibe an dem Schienenrad befestigt werden kann.

Bevorzugt ist vorgesehen, dass das erste Verbindungsmittel in dem ersten Bohrloch des Schienenrads und/oder dass das zweite Verbindungsmittel in dem zweiten Bohrloch des Schienenrads angeordnet ist. Das erste Verbindungsmittel kann durch das zugeordnete erste Bohrloch hindurchragen, und/oder das zweite Verbindungsmittel kann durch das zugeordnete zweite Bohrloch hindurchragen.

Wenn nur einseitig des Schienenrads ein Reibring angeordnet ist, können das erste Verbindungsmittel und/oder das zweite Verbindungsmittel jedes Ringsegments ohne Spiel mit Passung in dem jeweils zugeordneten ersten und/oder zweiten Bohrloch angeordnet sein. Das jeweilige Ringsegment ist aufgrund der Passung des zweiten Verbindungsmittels in der zweiten Durchgangsöffnung in der Axialrichtung und der Umfangsrichtung und der Radialrichtung an dem Schienenrad festgelegt. Aufgrund der Spielpassung des ersten Verbindungsmittels in der ersten Durchgangsöffnung ist in diesem Bereich jedoch eine relative Beweglichkeit des Ringsegments, insbesondere zum Ausgleich einer thermischen Ausdehnung, gegenüber dem Schienenrad vorgesehen. Bevorzugt ist das Ringsegment aufgrund der Spielpassung des ersten Verbindungsmittels in der ersten Durchgangsöffnung nur in der Axialrichtung an dem Schienenrad festgelegt.

Wenn nur einseitig des Schienenrads ein Reibring angeordnet ist, können das erste Verbindungsmittel und das zweite Verbindungsmittel den Steg des Schienenrads beziehungsweise das erste zugeordnete Bohrloch und das zweite zugeordnete Bohrloch vollständig durchdringen. Auf der dem Ringsegment gegenüberliegenden Seite des Radsteges können Muttern auf den als Schrauben oder Bolzen ausgebildeten Verbindungmitteln zur Befestigung des Ringsegments aufgeschraubt sein.

Bei der einseitigen Befestigung nur eines Reibrings am Schienenrad kann alternativ auch vorgesehen sein, dass das erste Verbindungsmittel in der ersten Durchgangsöffnung und das zweite Verbindungsmittel in der zweiten Durchgangsöffnung des jeweiligen Ringsegments ohne Spiel und mit Passung angeordnet sind, und dass das erste Verbindungsmittel mit Spielpassung in dem zugeordneten ersten Bohrloch des Radsteges angeordnet ist, wohingegen das zweite Verbindungsmittel ohne Spiel mit Passung in dem zweiten zugeordneten Bohrloch des Radsteges angeordnet ist. In diesem Fall wird die relative Beweglichkeit des jeweiligen Ringsegments im Bereich des ersten Verbindungsmittels bei einer thermischen Ausdehnung dadurch gewährleistet, dass das erste Verbindungsmittel innerhalb des zugeordneten ersten Bohrlochs des Schienenrads beweglich ist.

Bevorzugt kann vorgesehen sein, dass die Bremsscheibe zwei Reibringe, nämlich einen ersten Reibring und einen zweiten Reibring, umfasst.

Der erste Reibring und der zweite Reibring sind bevorzugt beidseitig des Schienenrads, insbesondere des Stegs des Schienenrads, angeordnet.

Bevorzugt kann vorgesehen sein, dass der erste Reibring und der zweite Reibring mit Verbindungsmitteln, insbesondere Schrauben oder Bolzen, mit dem Schienenrad, insbesondere mit einem Steg des Schienenrads, verbunden sind, wobei die Verbindungsmittel in Bohrlöchern des Schienenrads angeordnet sind.

Sowohl der erste Reibring als auch der zweite Reibring umfassen mindestens zwei Ringsegmente, wobei jeweils mindestens ein Führungsmittel fest in einer ersten Stirnfläche der Ringsegmente und spielbehaftet in einer zugeordneten Führungsmittelaufnahme in der zweiten Stirnfläche eines benachbarten Ringsegments angeordnet ist.

Weiter bevorzugt kann vorgesehen sein, dass der erste Reibring und der zweite Reibring mit Verbindungsmitteln, insbesondere Schrauben oder Bolzen, insbesondere einseitig oder wechselseitig, miteinander verbunden sind.

Bei einer einseitigen Verbindung des ersten Reibrings mit dem zweiten Reibring sind die Verbindungsmittel nur von einer ersten Seite des Schienenrads, beispielsweise von der Außenseite, in die Bremsscheibe, beispielsweise in den ersten Reibring, eingeführt. Im Falle einer wechselseitigen Verbindung sind die Verbindungsmittel in Umfangsrichtung gesehen abwechselnd von der ersten Schienenradseite, beispielsweise von der Außenseite, durch den ersten Reibring und von der gegenliegenden zweiten Schienenradseite, beispielsweise von der Innenseite, durch den zweiten Reibring eingesetzt.

Bei einer einseitigen Verbindung zwischen dem ersten Reibring und dem zweiten Reibring ist bevorzugt vorgesehen, dass jedes Ringsegment des ersten Reibringes mindestens eine erste Durchgangsöffnung, insbesondere eine erste Durchgangsbohrung, und mindestens eine zweite Durchgangsöffnung, insbesondere eine zweite Durchgangsbohrung, aufweist, wobei in der ersten Durchgangsöffnung jedes Ringsegments des ersten Reibringes ein erstes Verbindungsmittel in einer Spielpassung oder in einer Passung angeordnet ist, und wobei in der zweiten Durchgangsöffnung jedes Ringsegments des ersten Reibrings ein zweites Verbindungsmittel ohne Spiel mit Passung angeordnet ist, wobei das erste Verbindungsmittel ein der ersten Durchgangsöffnung zugeordnetes erstes Bohrloch in dem Schienenrad, insbesondere in dem Steg des Schienenrads, bevorzugt mit Spiel und ohne Passung, durchdringt, und wobei das zweite Verbindungsmittel ein der zweiten Durchgangsöffnung zugeordnetes zweites Bohrloch in dem Schienenrad, insbesondere dem Steg des Schienerads, bevorzugt ohne Spiel mit Passung, durchdringt, und wobei jedes Ringsegments des zweiten Reibrings mindestens zwei Gewindebohrungen aufweist, wobei das erste Verbindungsmittel und das zweite Verbindungsmittel in den Gewindebohrungen eingeschraubt sind.

Die Gewindebohrungen in den Ringsegmenten des zweiten Reibrings sind bevorzugt als Sackbohrungen ausgebildet und durchdringen das jeweilige Ringsegment nicht.

Durch das Einschrauben der Verbindungsmittel in den Gewindebohrungen der Ringsegmente des zweiten Reibrings werden der erste Reibring und der zweite Reibring einseitig miteinander verbunden und verspannt.

Bevorzugt ist das erste Verbindungsmittel mit Spielpassung in der ersten Durchgangsöffnung des jeweiligen Ringsegments des ersten Reibringes und mit Spiel ohne Passung in dem ersten zugeordneten Bohrloch des Schienenrads angeordnet sein, wobei gleichzeitig das zweite Verbindungsmittel ohne Spiel mit Passung sowohl in der zweiten Durchgangsöffnung des jeweiligen Ringsegments als auch in dem der zweiten Durchgangsöffnung zugeordneten zweiten Bohrloch des Schienenrads angeordnet ist.

Alternativ sind das erste Verbindungsmittel und das zweite Verbindungsmittel in der ersten und der zweiten Durchgangsöffnung des jeweiligen Ringsegments des ersten Reibrings jeweils ohne Spiel und mit Passung angeordnet, und das erste Verbindungsmittel ist mit Spielpassung in dem der ersten Durchgangsöffnung zugeordneten ersten Bohrloch des Schienenrads angeordnet und das zweite Verbindungsmittel ist ohne Spiel mit Passung in dem der zweiten Durchgangsöffnung zugeordneten zweiten Bohrloch des Schienenrads angeordnet. Bei einer derartigen Ausgestaltung sind die jeweiligen Ringsegmente sowohl des ersten Reibrings als auch des zweiten Reibrings im Bereich des zweiten Verbindungsmittels ohne Bewegungsspielraum an dem Schienenrad festgelegt. Aufgrund der Spielpassung des ersten Verbindungsmittels in der der ersten Durchgangsöffnung zugeordneten ersten Bohrung des Schienenrads ist jedoch eine thermische Ausdehnung sowohl des jeweiligen Ringsegments des ersten Reibringes als auch des jeweiligen Ringsegments des zweiten Reibrings möglich.

Mit Vorteil kann vorgesehen sein, dass jedes Ringsegment des ersten Reibringes und des zweiten Reibringes genau eine Durchgangsöffnung, insbesondere eine Durchgangsbohrung, aufweist, wobei in der Durchgangsöffnung jedes Ringsegments ein Verbindungsmittel mit einer Spielpassung oder Passung angeordnet ist, wobei jedes Verbindungsmittel ein der Durchgangsöffnung zugeordnetes Bohrloch im Schienenrad mit Passung oder Spielpassung durchdringt und in einer Gewindebohrung des jeweils gegenüberliegenden Ringsegments des jeweils gegenüberliegenden Reibringes eingeschraubt ist.

In einer ersten Alternative dieser Ausführungsform sind die Verbindungsmittel jeweils in den Durchgangsöffnungen des jeweiligen Ringsegments des ersten Reibringes und des zweiten Reibringes mit Spiel angeordnet und in der zugeordneten Bohrung im Schienenrad ohne Spiel mit Passung angeordnet. Jedes Ringsegment des ersten Reibringes und des zweiten Reibringes wird dann durch das in die jeweilige Gewindebohrung eingeschraubte Ende des Verbindungsmittels an dem Schienenrad festgelegt. Aufgrund der Spielpassung des jeweiligen Verbindungsmittels in der genau einen Durchgangsöffnung ist in diesem Bereich eine thermische Ausdehnung jedes Ringsegments des ersten Reibringes und des zweiten Reibringes möglich.

In einer zweiten Alternative sind die Verbindungsmittel jeweils in den Durchgangsöffnungen des jeweiligen Ringsegments des ersten Reibringes und des zweiten Reibringes ohne Spiel mit Passung angeordnet in der zugeordneten Bohrung in Schienenrad mit Spielpassung angeordnet.

In einer dritten Alternative ist eines der Verbindungsmittel in der Durchgangsöffnung des Ringsegments des ersten Reibrings mit oder ohne Passung und in dem zugeordneten Bohrloch im Steg mit Spiel und ohne Passung angeordnet und das zweite der Verbindungsmittel ist ohne Spiel mit Passung in der Durchgangsöffnung des Ringsegments des zweiten Reibrings und ohne Spiel mit Passung in der zugeordneten Bohrung angeordnet.

Die Gewindebohrung ist bevorzugt auf einer der Reibfläche gegenüberliegenden Rückseite des Ringsegments angeordnet. Die Gewindebohrung kann dabei in einem, insbesondere domartigen, Vorsprung angeordnet sein.

Mit weiterem Vorteil kann vorgesehen sein, dass die Verbindungsmittel einen Verschleißabschnitt aufweisen, wobei ein axiales Ende des Verschleißabschnitts plan mit der Reibfläche angeordnet ist und Teil der Reibfläche ist.

Bevorzugt sind die Verbindungsmittel als Schrauben oder Bolzen mit einem Schraubenkopf oder Bolzenkopf ausgebildet. Der Schraubenkopf oder der Bolzenkopf ist dabei in der Reibfläche des ersten und/oder des zweiten Reibringes versenkt angeordnet. Der Verschleißabschnitt ist dann durch den Schraubenkopf oder den Bolzenkopf gebildet. Das axiale Ende des Verschleißabschnitts, insbesondere des Schraubenkopfes oder des Bolzenkopfes, ist plan mit der Reibfläche angeordnet und als Teil der Reibfläche ausgebildet. Mit anderen Worten kann auch der Verschleißabschnitt, insbesondere das axiale Ende des Verschleißabschnitts, Bremskräfte aufnehmen und wird gemeinsam mit der Reibfläche durch Bremsvorgänge verschlissen.

Die Bereitstellung eines Verbindungsmittels mit einem Verschleißabschnitt, welcher Teil der Reibfläche ist, führt zu einer effektiven Erhöhung der Reibfläche der Bremsscheibe.

Ferner ist bevorzugt vorgesehen, dass der Verschleißabschnitt, insbesondere der Schraubenkopf oder der Bolzenkopf, aus dem gleichen Material wie die Ringsegmente, insbesondere wie die Reibfläche, bestehen. Grundsätzlich können der Verschleißabschnitt, insbesondere der Schraubenkopf oder der Bolzenkopf, und die Ringsegmente, insbesondere die Reibflächen, auch aus unterschiedlichen Materialien bestehen.

Eine weitere Lösung der der Erfindung zugrundeliegenden Aufgabe liegt in der Bereitstellung einer Bremsscheibe für ein vorbeschriebenes Schienenrad. #

Die Bremsscheibe ist bevorzugt eine Radbremsscheibe.

Die im Rahmen des vorbeschriebenen Schienenrads erläuterten Merkmale und Vorteile können analog auch auf die Bremsscheibe übertragen werden.

Eine noch weitere Lösung der der Erfindung zugrundeliegenden Aufgabe liegt in der Bereitstellung eines Ringsegments für eine vorbeschriebene Bremsscheibe beziehungsweise für ein vorbeschriebenes Schienenrad mit einer Bremsscheibe.

Das Ringsegment kann entsprechend einer der vorbeschriebenen Ausführungsformen ausgebildet sein.

Eine weitere Lösung der der Erfindung zugrundeliegenden Aufgabe wird mit der Bereitstellung eines Verbindungsmittels für ein Schienenrad oder für eine Bremsscheibe bereitgestellt, wobei das Verbindungsmittel einen Verschleißabschnitt aufweist, wobei ein axiales Ende des Verschleißabschnitts als Reibfläche ausgebildet ist.

Das Verbindungsmittel ist bevorzugt als eine Schraube oder ein Bolzen ausgebildet, und der Verschleißabschnitt ist insbesondere bevorzugt ein Schraubenkopf oder ein Bolzenkopf.

### Kurze Beschreibung der Figuren

Die Erfindung wird folgend anhand der Figuren näher erläutert. Es zeigen
- Fig. 1: eine Außenseite eines Schienenrads mit einem Reibring umfassend Ringsegmente,
- Fig. 2: eine Explosionsdarstellung eines Reibrings mit Ringsegmenten,
- Fig. 3a: ein Ringsegment mit einer Befestigungsaufnahme für ein Führungsmittel,
- Fig. 3b: ein Ringsegment mit einem in einer Befestigungsaufnahme angeordneten Führungsmittel,
- Fig. 4: eine Innenseite eines Schienenrad mit einem Reibring umfassend Ringsegmente,
- Fig. 5: eine Rückseite eines Ringsegments,
- Fig. 6a: eine Schnittdarstellung durch ein Schienenrad im Bereich eines ersten Verbindungsmittels,
- Fig. 6b: eine Schnittdarstellung durch ein Schienenrad im Bereich eines zweiten Verbindungsmittels,

- Fig. 6c: eine weitere Schnittdarstellung durch ein Schienenrad im Bereich eines ersten Verbindungsmittels,
- Fig. 7: eine Explosionsdarstellung eines Schienenrad mit zwei wechselseitig miteinander verbundenen Reibringen,
- Fig. 8: ein Ringsegment für ein Schienenrad mit zwei wechselseitig miteinander verbundenen Reibringen,
- Fig. 9: eine Explosionsdarstellung eines weiteren Reibrings mit Ringsegmenten,
- Fig. 10a: ein Ringsegment mit zwei Befestigungsaufnahmen für zwei Führungsmittel,
- Fig. 10b: ein Ringsegment mit zwei jeweils in einer Befestigungsaufnahme angeordneten Führungsmitteln, und
- Fig. 11: eine Explosionsdarstellung eines Schienenrad mit zwei wechselseitig miteinander verbundenen Reibringen,

### Ausführliche Beschreibung der Figuren

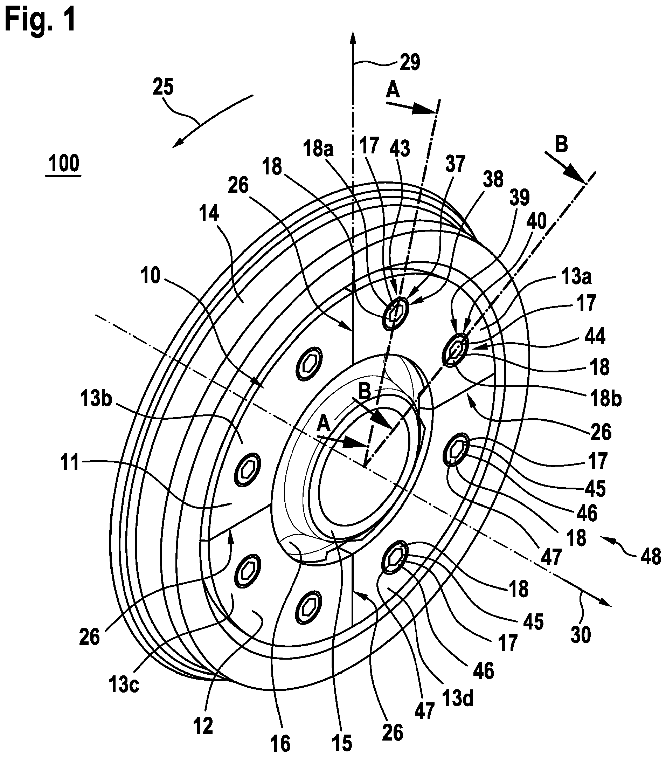

Fig. 1 zeigt ein Schienenrad 100 für ein nicht näher dargestelltes Schienenfahrzeug umfassend eine Bremsscheibe 10. Die Bremsscheibe 10 umfasst einen ersten Reibring 11 mit einer Reibfläche 12. Der erste Reibring 11 ist auf einer Außenseite 48 des Schienenrads 100 angeordnet. Der Reibring 11 umfasst vier Ringsegmente 13a, 13b, 13c, 13d. Das Schienenrad 100 weist eine Lauffläche 14 sowie einen Nabensitz 15 auf. Der erste Reibring 11 ist an einem sich zwischen dem Nabensitz 15 und der Lauffläche 14 erstreckenden Steg 16 mittels als Schrauben 17 ausgebildeten Verbindungsmitteln 18 befestigt.

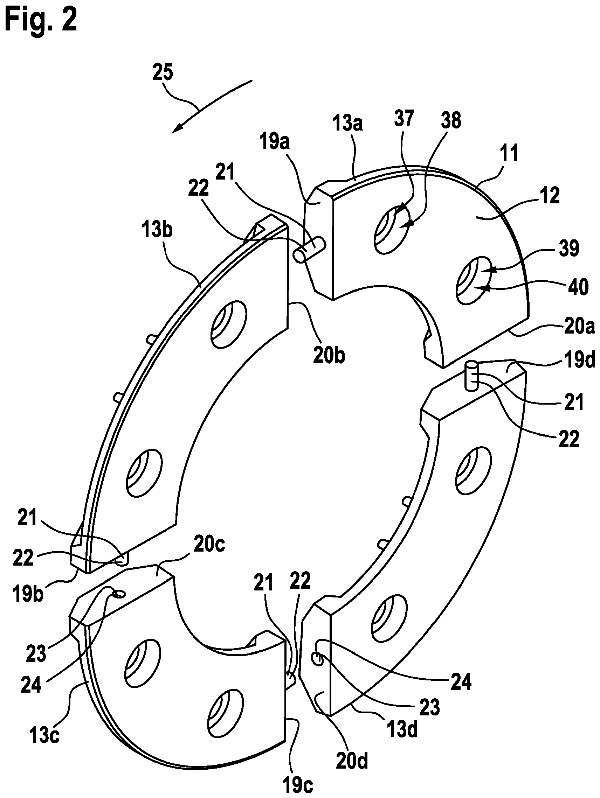

Fig. 2 zeigt eine Explosionszeichnung des ersten Reibrings 11 des Schienenrads 100 nach Fig. 1. Jedes der Ringsegmente 13a-13d umfasst eine erste Stirnfläche 19a-19d und eine zweite Stirnfläche 20a-20d. Wie in den Fig. 1 und 2 gezeigt ist, ist jedes Ringsegment 13a-13d mit der ersten Stirnfläche 19a-19d benachbart an der zweiten Stirnfläche 20a-20d eines jeweils benachbarten Ringsegments 13a-13d angeordnet. An der ersten Stirnfläche 19a-19d jedes Ringsegments 13a-13d ist ein Führungsmittel 21 fest angeordnet, welches von der ersten Stirnseite 19a-19d hervorsteht oder aus der ersten Stirnseite 19a-19d herausragt. Die Führungsmittel 21 sind als Stifte 22 ausgebildet. In der zweiten Stirnfläche 20a-20d jedes Ringsegments 13a-13d ist eine zum Führungsmittel 21 komplementäre Führungsmittelaufnahme 23 vorgesehen, welche in Form eines Sacklochs 24 ausgebildet ist. Im zusammengesetzten Zustand des ersten Reibrings 11 nach Fig. 1 ist das Führungsmittel 21 jedes Ringsegments 13a-13d in der Führungsmittelaufnahme 23 des jeweils benachbarten Ringsegments 13a-13d angeordnet ist. Dabei sind die Führungsmittel 21 tangential zur Umfangsrichtung 25 des Reibringes 11 spielbehaftet und beweglich in den Führungsmittelaufnahmen 23 angeordnet. Grundsätzlich ist es jedoch auch möglich, dass das jeweilige Führungsmittel 21 in der Radialrichtung 29 oder in der Axialrichtung 30 (Fig. 1) oder in einer Kombination dieser Richtungen spielbehaftet in der Führungsmittelaufnahme 23 angeordnet ist. Im am Schienenrad 100, insbesondere am Steg 16 des Schienenrades 100, angeordneten und thermisch unbelasteten Zustand des ersten Reibringes 11 ist ferner zwischen der jeweiligen ersten Stirnseite 19a-19d und der zweiten Stirnseite 20a-20d zweier benachbart angeordneter Ringsegmente 13a-13d ein freier Abstand 26 vorgesehen. Wird die Bremsscheibe 10 bei einem Bremsvorgang thermisch belastet, so können sich die einzelnen Ringsegmente 13a-13d ausdehnen, wobei das Führungsmittel 21 jedes Ringsegments 13a-13d in der Führungsmittelaufnahme 23 des benachbarten Ringsegments 13a-13d gleitet. Hierdurch wird eine Zentrierung der Ringsegmente 13a-13d beziehungsweise des Reibringes 11 während der thermischen Ausdehnung gewährleistet.

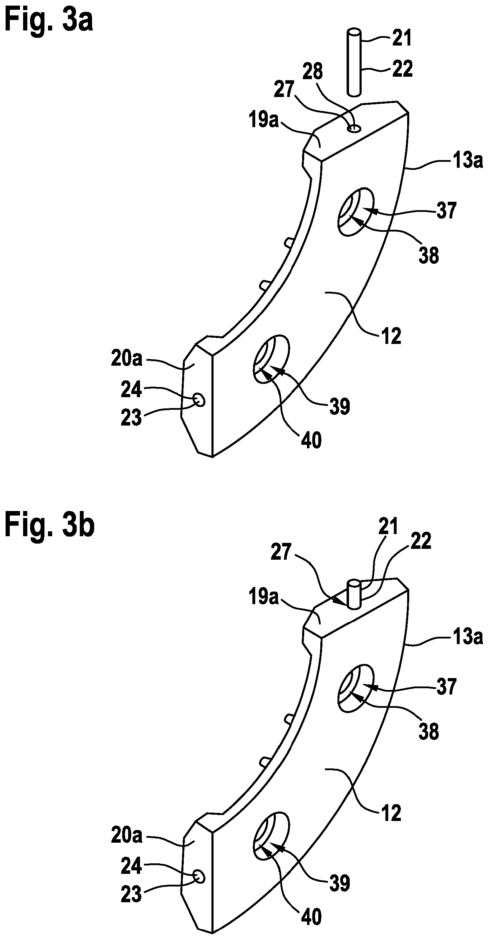

Die Fig. 3a und 3b zeigen stellvertretend für alle Ringsegemente 13a-13d ein Ringsegment 13a im Detail. Nach Fig. 3a kann das Ringsegment 13a in der ersten Stirnfläche 19a eine Befestigungsaufnahme 27 aufweisen, welche als Sackloch 28 ausgebildet ist. Das als Stift 22 ausgebildete Führungsmittel 21 wird mit einer Presspassung in der Befestigungsaufnahme 27 angeordnet. Mit diesem Schritt wird ein Ringsegment 13a nach Fig. 3b erhalten, in dem das als Stift 22 ausgebildete Führungsmittel 21 fest an der ersten Stirnseite 19a des jeweiligen Ringsegments 13a angeordnet ist und von der Stirnseite 19a hervorsteht beziehungsweise aus der Stirnseite 19a herausragt.

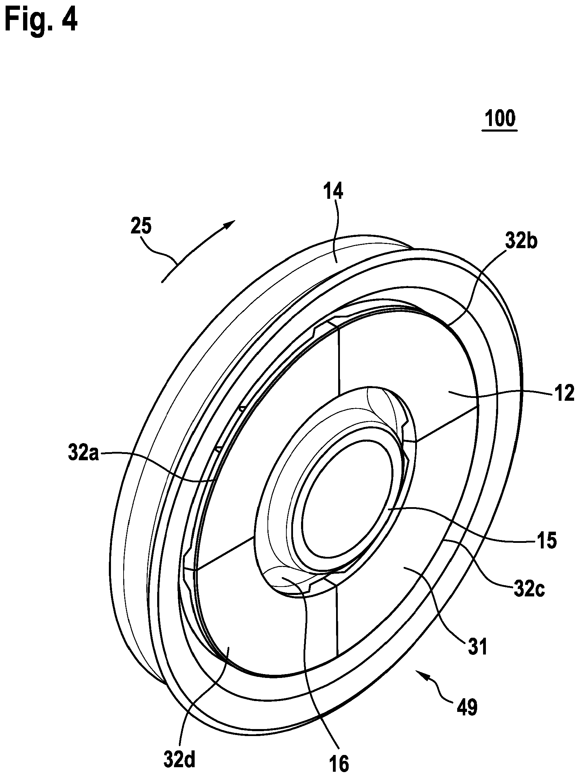

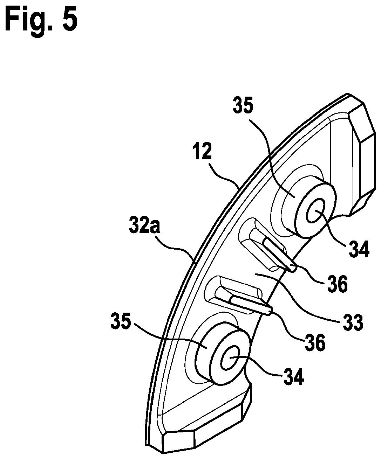

Fig. 4 zeigt das Schienenrad 100 der Fig. 1 von der der Außenseite 48 gegenüberliegenden Innenseite 49. Auf der Innenseite 49 des Schienenrads 100 ist ein zweiter Reibring 31 angeordnet. Der zweite Reibring 31 weist wie der erste Reibring 11 ebenfalls Ringsegmente 32a bis 32d auf. Fig. 5 zeigt ein stellvertretend ein Ringsegment 32a des zweiten Reibrings 31 von der der Reibfläche 12 gegenüberliegenden Rückseite 33. Auf der Rückseite 33 sind Gewindebohrungen 34 in domartigen Vorsprüngen 35 angeordnet. Ferner sind Kühlrippen 36 auf der Rückseite 33 angebracht.

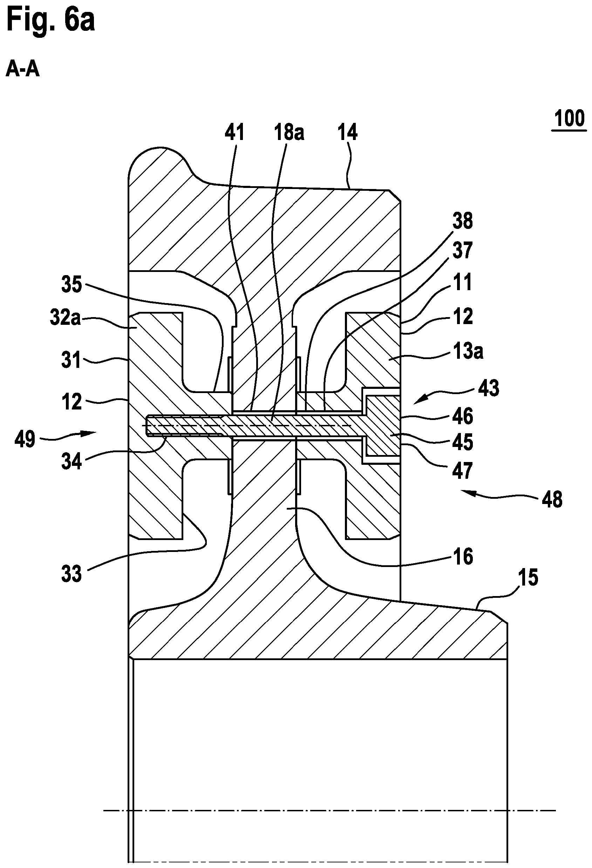

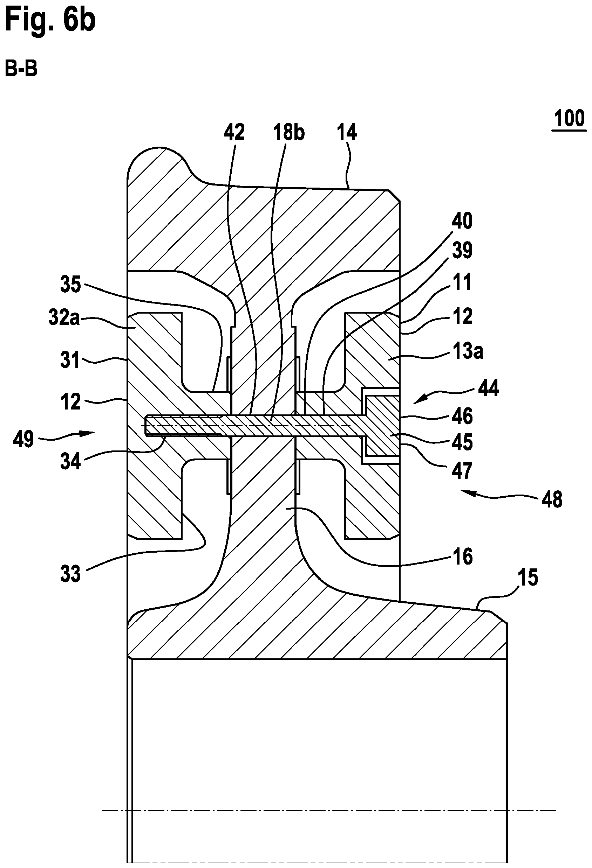

Der erste Reibring 11 und der zweite Reibring 31 sind miteinander mittels der Verbindungsmittel 18 verbunden. Zu diesem Zweck weist jedes Ringsegment 13a-13d des ersten Reibrings 11 eine erste Durchgangsöffnung 37, welche als erste Durchgangsbohrung 38 ausgebildet ist, und eine zweite Durchgangsöffnung 39, welche als zweite Durchgangsbohrung 40 ausgebildet ist, auf. In der ersten Durchgangsöffnung 37 ist ein erstes Verbindungsmittel 18a angeordnet. Ein zweites Verbindungsmittel 18b ist in der zweiten Durchgangsöffnung 39 angeordnet. Wie in der Darstellung der Fig. 6a gezeigt, durchdringt das erste Verbindungsmittel 18a die erste Durchgangsöffnung 37 sowie ein der ersten Durchgangsöffnung 37 zugeordnetes erstes Bohrloch 41 im Steg 16 des Schienenrads 100. Das erste Verbindungsmittel 18a ist in einer Gewindebohrung 34 auf der Rückseite 33 des gegenüberliegenden Ringsegments 32a-32d des zweiten Reibrings 31 eingeschraubt. Das erste Verbindungsmittel 18a ist sowohl in der ersten Durchgangsbohrung 38 jedes Ringsegments 13a-13d des ersten Reibrings 11 als auch in dem zugeordneten ersten Bohrloch 41 im Steg 16 mit einer Spielpassung angeordnet, sodass sich das Ringsegment 13a des ersten Reibrings 11 und das gegenüberliegende Ringsegement 32a des zweiten Reibrings 31 im Bereich des ersten Verbindungsmittels 18a relativ gegenüber dem Steg 16 bewegen können, um thermische Spannungen auszugleichen. Das zweite Verbindungsmittel 18b ist gemäß Fig. 6b ohne Spiel und mit Passung in der zweiten Durchgangsöffnung 39 des Ringsegments 13a-13d angeordnet und durchdringt diese ebenfalls. Ferner durchdringt das zweite Verbindungsmittel 18b ein der zweiten Durchgangsöffnung 39 des Ringsegments 13a-13d zugeordnetes zweites Bohrloch 42 im Steg 16 des Schienenrads 100 ohne Spiel mit Passung und ist ebenfalls in eine Gewindebohrung 34 auf der Rückseite 33 des gegenüberliegenden Ringsegments 32a-32d des zweiten Reibrings 31 eingeschraubt. Die Verbindung mit dem ersten Verbindungsmittel 18a stellt ein Loslager 43 für die jeweiligen Ringsegment 13a-13d bzw. 32a-32d dar, während die Verbindung mit dem zweiten Verbindungsmittel 18b als ein Festlager 44 ausgebildet ist. Die Verbindungsmittel 18a, 18b sind von der Außenseite 48 des Schienenrads 100 in den ersten Reibring 11 eingesetzt, sodass der erste Reibring 11 und der zweite Reibring 31 einseitig miteinander verbunden sind. Die Ringsegmente 32a-32d des zweiten Reibrings 31 können analog zu den Ringsegmenten 13a-13d des ersten Reibrings 11 Führungsmittel 21 in einer ersten Stirnseite 19a-19d und komplementäre Führungsmittelaufnahmen 23 in der zweiten Stirnseite 20a-20d aufweisen.

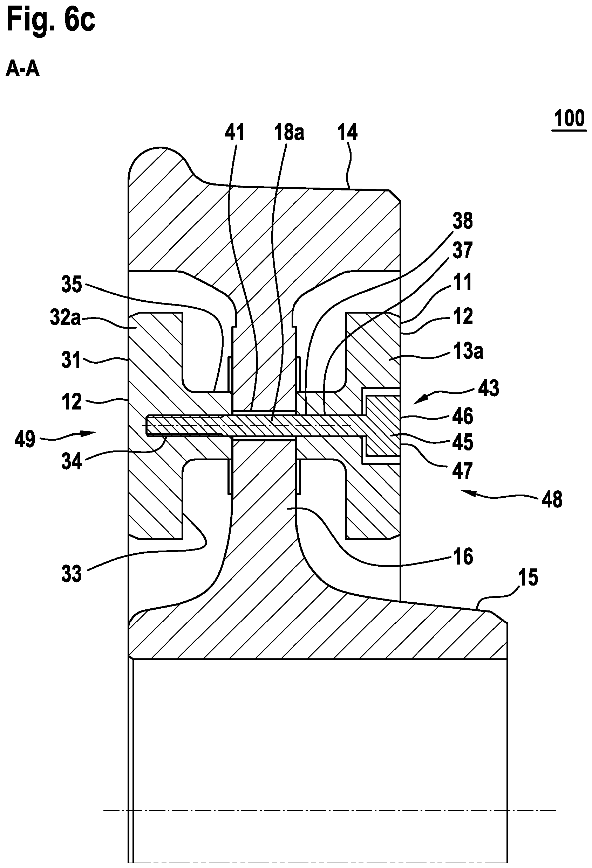

Alternativ ist es auch möglich, dass das erste Verbindungsmittel 18a wie in Fig. 6c gezeigt in der ersten Durchgangsöffnung 37 im ersten Reibring 11 ebenfalls ohne Spiel mit Passung angeordnet ist. Das erste Verbindungsmittel 18a ist auch in der in Fig. 6c gezeigten Ausführungsform durch das erste Bohrloch 41 mit Spielpassung hindurchgeführt. Auf diese Weise sind sowohl der erste Reibring 11 als auch der zweite Reibring 31 im Bereich des ersten Verbindungmittels 18a beweglich gegenüber dem Schienenrad 100 befestigt, sodass eine thermische Ausdehnung beider Reibringe 11, 31 zugelassen ist.

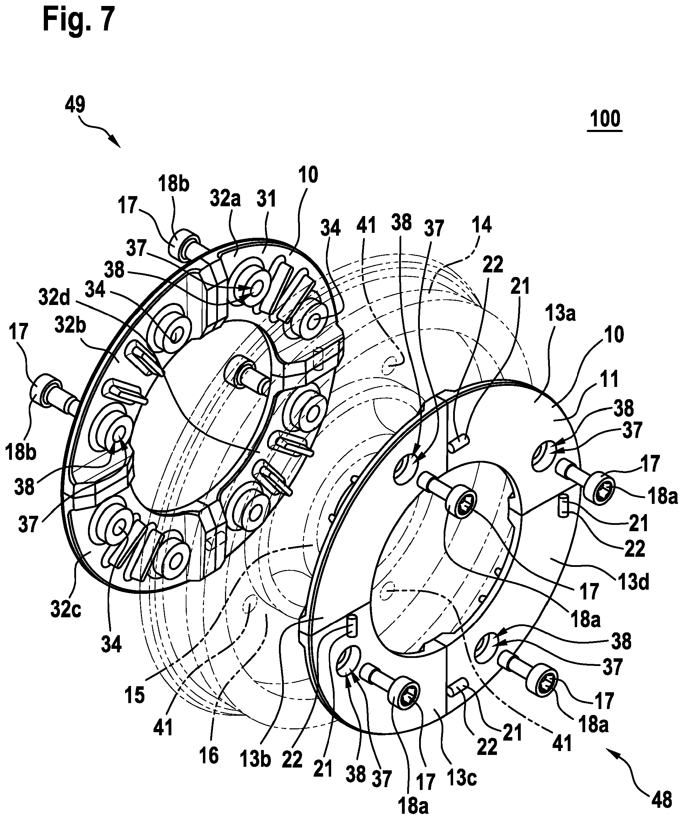

Eine noch weitere Ausführungsform ist in der Explosionsdarstellung der Fig. 7 gezeigt. Beidseitig des Schienenrads 100 der Fig. 7 sind ein erster Reibring 11 und ein zweiter Reibring 31 angeordnet. Die Ringsegmente 13a-13d des ersten Reibrings 11 und die Ringsegmente 32a-32d des zweiten Reibrings 31 sind identisch ausgebildet. Insbesondere weist jedes der Ringsegemente 13a-13d und 32a-32d ein Führungsmittel 21 und eine Führungsmittelaufnahme 23 auf. Im Gegensatz zu den vorstehend beschriebenen Ausführungsformen weist jedes Ringsegment 13a-13d und 32a-32d des ersten Reibrings 11 und des zweiten Reibrings 31 nur eine Durchgangsöffnung 37 auf. In der Durchgangsöffnung 37 jedes Ringsegments 13a-13d des ersten Reibrings 11 ist ein erstes Verbindungsmittel 18a mit Spielpassung nach Fig. 6a angeordnet. Das erste Verbindungsmittel 18a durchragt ein zugeordnetes Bohrloch 41 in dem Steg 16 des Schienenrades 100 und ist in dem gegenüberliegenden Ringsegment 32a-32d des zweiten Reibrings 31 in einer Gewindebohrung 34 eingeschraubt. Analog ist durch die Durchgangsöffnung 37 des gegenüberliegenden Ringsegments 32a-32d des zweiten Reibringes 31 ein zweites Verbindungsmittel 18b geführt, welches ebenfalls gemäß Fig. 6a in der Durchgangsöffnung 37 des jeweiligen Ringsegments 32a-32d des zweiten Reibrings 31 mit Spiel angeordnet ist. Das zweite Verbindungsmittel 18b durchdringt ein Bohrloch 41 im Steg 16 des Schienenrades 100 und ist in einer Gewindebohrung 34 des jeweils gegenüberliegenden Ringsegments 13a-13d des ersten Reibrings 11 eingeschraubt. Hierdurch wird eine wechselseitige Verschraubung des ersten Reibringes 11 und des zweiten Reibrings 31 erhalten. Das erste Verbindungsmittel 18a und das zweite Verbindungsmittel 18b sind in den Bohrlöchern 41 ohne Spiel mit Passung angeordnet.

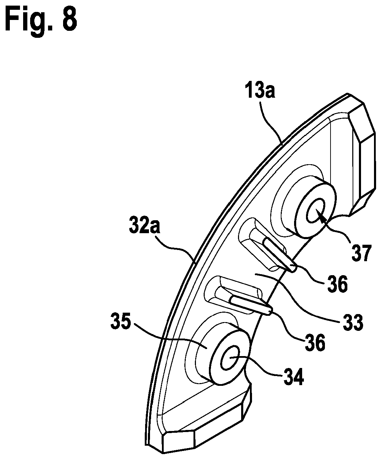

Fig. 8 zeigt ein Ringsegment 13a, 32a für den ersten Reibring 11 und den zweiten Reibring 31 der Ausführungsform nach Fig. 7. Das Ringsegment 13a, 32a weist eine Durchgangsöffnung 37 auf, durch die ein Verbindungsmittel 18a, 18b mit Spielpassung hindurchgeführt werden kann. Darüber hinaus weist das Ringsegment 13a, 32a eine Gewindebohrung 34 in einem domartigen Vorsprung 35 auf.

Nach den Fig. 1 und 6a bis 6c weisen die als Schrauben 17 ausgebildeten Verbindungsmittel 18, 18a, 18b einen Schraubenkopf 45 auf, welcher als Verschleißabschnitt 46 ausgebildet ist. Das bedeutet, dass der Schraubenkopf 45 an einem axialen Ende 47 plan mit der Reibfläche 12 ausgebildet ist und Teil der Reinfläche 12 ist. Der Verschleißabschnitt 46 ist dafür bevorzugt aus dem gleichen Material wie das Ringsegment 13a-13d, 32a-32d und insbesondere wie die Reibfläche 12 ausgebildet.

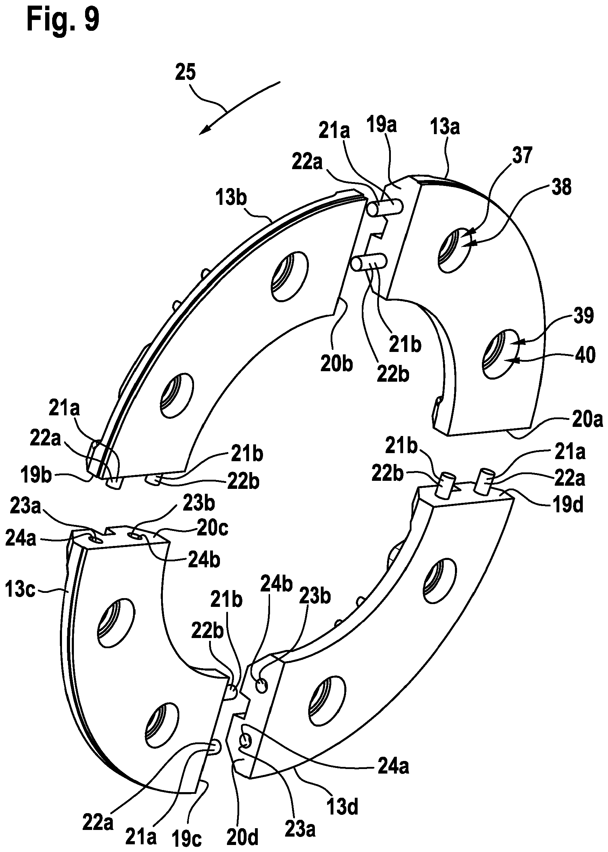

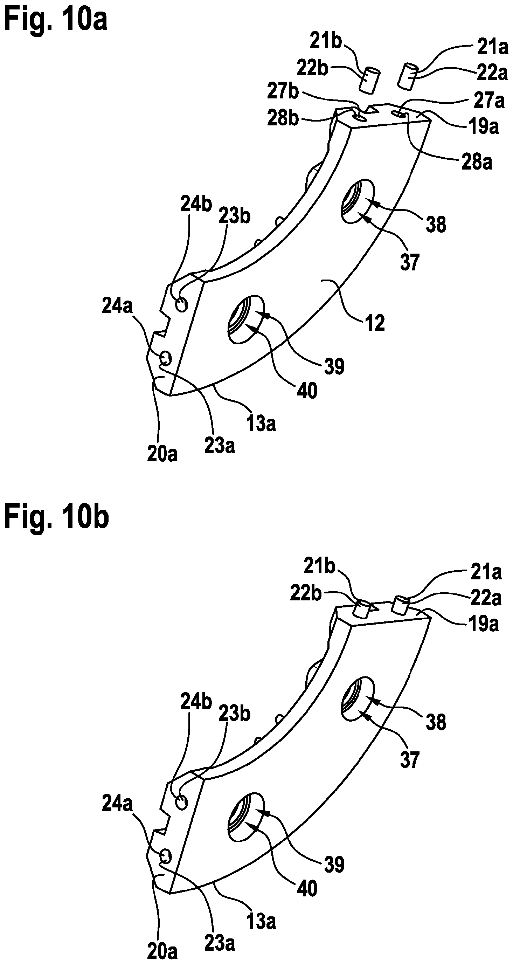

In den Fig. 9, 10a und 10b ist eine weitere Ausführungsform des ersten Reibrings 11 bzw. der Ringsegmente 13a-13d des Schienenrads 100 nach Fig. 1 dargestellt. Die Ausführungsformen der Fig. 9, 10a und 10b entsprechend weitestgehend denen der oben beschriebenen Ausführungsformen der Fig. 2, 3a und 3b. Der einzige wesentliche Unterschied besteht darin, dass bei den Ausführungsformen der Fig. 9, 10a und 10b an der ersten Stirnfläche 19a-19d jedes Ringsegments 13a-13d zwei Führungsmittel 21a, 21b fest angeordnet sind, welche von den ersten Stirnseiten 19a-19d hervorstehen oder aus der ersten Stirnseite 19a-19d herausragen. Die Führungsmittel 21a, 21b sind als Stifte 22a, 22b ausgebildet. In der zweiten Stirnfläche 20a-20d jedes Ringsegments 13a-13d sind zwei zu den Führungsmitteln 21a, 21b komplementäre Führungsmittelaufnahmen 23a, 23b vorgesehen, welche in Form von Sacklöchern 24a, 24b ausgebildet ist. Im zusammengesetzten Zustand des ersten Reibrings 11 sind die Führungsmittel 21a, 21b jedes Ringsegments 13a-13d in den Führungsmittelaufnahmen 23a, 23b des jeweils benachbarten Ringsegments 13a-13d angeordnet ist. Dabei sind die Führungsmittel 21a, 21b tangential zur Umfangsrichtung 25 des Reibringes 11 spielbehaftet und beweglich in den Führungsmittelaufnahmen 23 angeordnet.

Die Fig. 10a und 10b zeigen stellvertretend für alle Ringsegmente 13a-13d der Ausführungsform des Reibrings nach Fig. 9 ein Ringsegment 13a im Detail. Nach Fig. 9a kann das Ringsegment 13a in der ersten Stirnfläche 19a zwei Befestigungsaufnahmen 27a, 27b aufweisen, welche als Sacklöcher 28a, 28b ausgebildet ist. Die als Stifte 22a, 22b ausgebildeten Führungsmittel 21a, 21b werden mit einer Presspassung in den Befestigungsaufnahmen 27a, 27b angeordnet. Mit diesem Schritt wird ein Ringsegment 13a nach Fig. 10b erhalten, in dem die als Stifte 22a, 22b ausgebildeten Führungsmittel 21a, 21b fest an der ersten Stirnseite 19a des jeweiligen Ringsegments 13a angeordnet sind und von der Stirnseite 19a hervorstehen beziehungsweise aus der Stirnseite 19a herausragen.

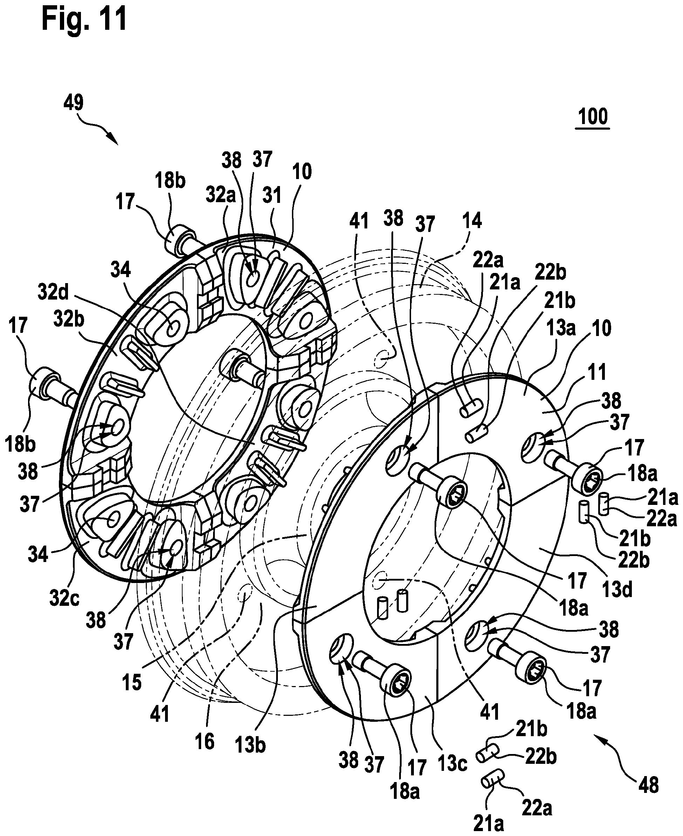

Eine weitere Ausführungsform eines Schienenrads 100 ist in der Explosionsdarstellung der Fig. 11 gezeigt. Wie bei der Ausführungsform der Fig. 7 sind bei der Ausführungsform der Fig. 11 ein erster Reibring 11 und ein zweiter Reibring 31 wechselseitig miteinander verschraubt. Der einzige Unterschied der Ausführungsform der Fig. 11 zu der Ausführungsform der Fig. 7 besteht darin, dass jedes der Ringsegmente 13a-13d und 32a-32d analog zu den Ringsegmenten 13a-13d der Fig. 9, 10a und 10b mit zwei Führungsmitteln 21a, 21b und zwei Führungsmittelaufnahmen 23a, 23b ausgebildet sind. Die weiteren Bezugszeichen der Fig. 11 bezeichnen die gleichen Bauteile wie diejenigen der Ausführungsform der Fig. 7.

Lister der Bezugszeichen
- 100: Schienenrad
- 10: Bremsscheibe
- 11: Erster Reibring
- 12: Reibfläche
- 13a: Ringsegment
- 13b: Ringsegment
- 13c: Ringsegment
- 13d: Ringsegment
- 14: Lauffläche
- 15: Nabensitz
- 16: Steg
- 17: Schraube
- 18: Verbindungsmittel
- 18a: Erstes Verbindungsmittel
- 18b: Zweites Verbindungsmittel
- 19a: Erste Stirnfläche
- 20a: Zweite Stirnfläche
- 21: Führungsmittel
- 21a: Führungsmittel
- 21b: Führungsmittel
- 22: Stift
- 22a: Stift
- 22b: Stift
- 23: Führungsmittelaufnahme
- 23a: Führungsmittelaufnahme
- 23b: Führungsmittelaufnahme
- 24: Sackloch

- 24a: Sackloch
- 24b: Sackloch
- 25: Umfangsrichtung
- 26: Abstand
- 27: Befestigungsaufnahme
- 27a: Befestigungsaufnahme
- 27b: Befestigungsaufnahme
- 28: Sackloch
- 28a: Sackloch
- 28b: Sackloch
- 29: Radialrichtung
- 30: Axialrichtung
- 31: Zweiter Reibring
- 32a: Ringsegment
- 32b: Ringsegment
- 32c: Ringsegment
- 32d: Ringsegment
- 33: Rückseite
- 34: Gewindebohrung
- 35: Vorsprung
- 36: Kühlrippe
- 37: Erste Durchgangsöffnung
- 38: Erste Durchgangsbohrung
- 39: Zweite Durchgangsöffnung
- 40: Zweite Durchgangsbohrung
- 41: Erstes Bohrloch
- 42: Zweites Bohrloch
- 43: Festlager
- 44: Loslager

- 45: Schraubenkopf
- 46: Verschleißabschnitt
- 47: Axiales Ende
- 48: Außenseite
- 49: Innenseite

## Patentansprüche

1. Schienenrad (100) für ein Schienenfahrzeug umfassend eine Bremsscheibe (10), wobei die Bremsscheibe (10) mindestens einen Reibring (11, 31) mit einer Reibfläche (12) umfasst, wobei der mindestens eine Reibring (11, 31) mindestens zwei Ringsegmente (13a, 13b, 13c, 13d, 32a, 32b, 32c, 32d) umfasst, wobei jedes Ringsegment (13a, 13b, 13c, 13d, 32a, 32b, 32c, 32d) eine erste Stirnseite (19a, 19b, 19c, 19d) und eine zweite Stirnseite (20a, 20b, 20c, 20d) umfasst, wobei an der ersten Stirnseite (19a, 19b, 19c, 19d) jedes Ringsegments (13a, 13b, 13c, 13d, 32a, 32b, 32c, 32d) mindestens ein Führungsmittel (21, 21a, 21b) angeordnet ist und wobei in der zweiten Stirnseite (20a, 20b, 20c, 20d) jedes Ringsegments (13a, 13b, 13c, 13d, 32a, 32b, 32c, 32d) mindestens eine Führungsmittelaufnahme (23, 23a, 23b) angeordnet ist, wobei jedes Ringsegment (13a, 13b, 13c, 13d, 32a, 32b, 32c, 32d) mit der ersten Stirnseite (19a, 19b, 19c, 19d) an der zweiten Stirnseite (20a, 20b, 20c, 20d) eines benachbarten Ringsegments (13a, 13b, 13c, 13d, 32a, 32b, 32c, 32d) derart angeordnet ist, dass das mindestens eine Führungsmittel (21, 21a, 21b) jedes Ringsegments (13a, 13b, 13c, 13d, 32a, 32b, 32c, 32d) in der mindestens einen Führungsmittelaufnahme (23, 23a, 23b) des benachbarten Ringsegments (13a, 13b, 13c, 13d, 32a, 32b, 32c, 32d) angeordnet ist, **dadurch gekennzeichnet,**
**dass** das mindestens eine Führungsmittel (21, 21a, 21b) jedes Ringsegments (13a, 13b, 13c, 13d, 32a, 32b, 32c, 32d) fest an der ersten Stirnseite (19a, 19b, 19c, 19d) angeordnet ist und dass das mindestens eine Führungsmittel (21, 21a, 21b) jedes Ringsegments (13a, 13b, 13c, 13d, 32a, 32b, 32c, 32d) spielbehaftet in der mindestens einen Führungsmittelaufnahme (23, 23a, 23b) der zweiten Stirnseite (20a, 20b, 20c, 20d) des benachbarten Ringsegments (13a, 13b, 13c, 13d, 32a, 32b, 32c, 32d) angeordnet ist.

2. Schienenrad (100) nach Anspruch 1, **dadurch gekennzeichnet, dass** das mindestens eine Führungsmittel (21, 21a, 21b) jedes Ringsegments (13a, 13b, 13c, 13d, 32a, 32b, 32c, 32d), insbesondere in Richtung der zweiten Stirnseite (20a, 20b, 20c, 20d) des benachbarten Ringsegments (13a, 13b, 13c, 13d, 32a, 32b, 32c, 32d), von der ersten Stirnseite (19a, 19b, 19c, 19d) hervorsteht und/oder aus der ersten Stirnseite (19a, 19b, 19c, 19d) herausragt.

3. Schienenrad (100) nach Anspruch 1 oder 2, **dadurch gekennzeichnet, dass** das mindestens eine Führungsmittel (21, 21a, 21b) ein Stift (22, 22a, 22b) oder ein Bolzen oder ein Kegel oder eine Feder oder eine Rippe ist, und/oder dass das mindestens eine Führungsmittel (21, 21a, 21b) einen runden, insbesondere kreisförmigen, oder vieleckigen, insbesondere rechteckigen, weiter insbesondere quadratischen, Querschnitt aufweist.

4. Schienenrad (100) nach einem der vorgenannten Ansprüche, **dadurch gekennzeichnet, dass** die erste Stirnseite (19a, 19b, 19c, 19d) jedes Ringsegments (13a, 13b, 13c, 13d, 32a, 32b, 32c, 32d) mindestens eine Befestigungsaufnahme (27, 27a, 27b) aufweist, wobei das mindestens eine Führungsmittel (21, 21a, 21b) in der mindestens einen Befestigungsaufnahme (27, 27a, 27b) fest angeordnet ist, wobei das mindestens eine Führungsmittel (21, 21a, 21b) bevorzugt in der mindestens einen Befestigungsaufnahme (27, 27a, 27b) stoffschlüssig, insbesondere durch Verschweißen oder Verlöten oder Verkleben, und/oder formschlüssig, insbesondere mit einer Rastverbindung oder einer Passfederverbindung, und/oder kraftschlüssig, insbesondere mit einer Schraubverbindung oder einer Presspassung, angeordnet ist.

5. Schienenrad (100) nach einem der vorgenannten Ansprüche, **dadurch gekennzeichnet, dass** das mindestens eine Führungsmittel (21, 21a, 21b) in der mindestens einen Führungsmittelaufnahme (23, 23a, 23b) in einer Umfangsrichtung (25) und/oder einer Axialrichtung (30) und/oder einer Radialrichtung (29) des Reibrings (11, 31) spielbehaftet angeordnet ist.

6. Schienenrad (100) nach einem der vorgenannten Ansprüche, **dadurch gekennzeichnet, dass** der mindestens eine Reibring (11, 31) mit Verbindungsmitteln (18, 18a, 18b), insbesondere mit Schrauben (17) oder Bolzen, mit dem Schienenrad, insbesondere mit einem Steg (16) des Schienenrads, verbunden ist.

7. Schienenrad (100) nach einem der vorgenannten Ansprüche, **dadurch gekennzeichnet, dass** jedes Ringsegment (13a, 13b, 13c, 13d, 32a, 32b, 32c, 32d) mindestens eine erste Durchgangsöffnung (37), insbesondere eine erste Durchgangsbohrung (38), aufweist, wobei in der ersten Durchgangsöffnung (37) jedes Ringsegments (13a, 13b, 13c, 13d, 32a, 32b, 32c, 32d) ein erstes Verbindungsmittel (18, 18a) mit Spielpassung angeordnet ist, und/oder dass jedes Ringsegment (13a, 13b, 13c, 13d, 32a, 32b, 32c, 32d) mindestens zwei Durchgangsöffnungen (37, 39), insbesondere Durchgangsbohrungen (38, 40), umfasst, wobei in einer zweiten Durchgangsöffnung (39) jedes Ringsegments (13a, 13b, 13c, 13d, 32a, 32b, 32c, 32d) ein zweites Verbindungsmittel (18, 18b) mit Passung angeordnet ist.

8. Schienenrad (100) nach Anspruch 7, **dadurch gekennzeichnet, dass** das Schienenrad, insbesondere der Steg (16) des Schienenrads, für jedes Ringsegment (13a, 13b, 13c, 13d, 32a, 32b, 32c, 32d) ein der ersten Durchgangsöffnung (37) zugeordnetes erstes Bohrloch (41) und/oder ein der zweiten Durchgangsöffnung (39) zugeordnetes zweites Bohrloch (42) aufweist, wobei bevorzugt das erste Verbindungsmittel (18a) in dem ersten Bohrloch (41) des Schienenrads und/oder dass das zweite Verbindungsmittel (18b) in dem zweiten Bohrloch (42) des Schienenrads angeordnet ist.

9. Schienenrad (100) nach einem der vorgenannten Ansprüche, **dadurch gekennzeichnet, dass** die Bremsscheibe (10) zwei Reibringe (11, 31), nämlich einen ersten Reibring (11) und einen zweiten Reibring (31), umfasst.

10. Schienenrad (100) nach Anspruch 9, **dadurch gekennzeichnet, dass** der erste Reibring (11) und der zweite Reibring (31) mit Verbindungsmitteln (18, 18a, 18b), insbesondere Schrauben (17) oder Bolzen, mit dem Schienenrad, insbesondere mit einem Steg (16) des Schienenrads, verbunden sind, wobei die Verbindungsmittel (18, 18a, 18b) in den Bohrlöchern (41, 42) des Schienenrads angeordnet sind.

11. Schienenrad (100) nach Anspruch 9 oder 10, **dadurch gekennzeichnet, dass** jedes Ringsegment (13a, 13b, 13c, 13d) des ersten Reibrings (11) mindestens eine erste Durchgangsöffnung (37), insbesondere eine erste Durchgangsbohrung (38), und mindestens eine zweite Durchgangsöffnung (37), insbesondere eine zweite Durchgangsbohrung (40), aufweist, wobei in der ersten Durchgangsöffnung (37) jedes Ringsegments (13a, 13b, 13c, 13d) des ersten Reibrings (11) ein erstes Verbindungsmittel (18, 18a) in einer Spielpassung oder einer Passung angeordnet ist und wobei in der zweiten Durchgangsöffnung (39) jedes Ringsegments (13a, 13b, 13c, 13d) des ersten Reibrings (11) ein zweites Verbindungsmittel (18, 18b) ohne Spiel mit Passung angeordnet ist, wobei das erste Verbindungsmittel (18, 18a) ein der ersten Durchgangsöffnung (37) zugeordnetes erstes Bohrloch (41) in dem Schienenrad, insbesondere in dem Steg (16) des Schienenrads, bevorzugt mit Spiel ohne Passung, durchdringt, und wobei das zweite Verbindungsmittel (18, 18b) ein der zweiten Durchgangsöffnung (39) zugeordnetes zweites Bohrloch (42) in dem Schienenrad, insbesondere dem Steg (16) des Schienenrads, bevorzugt ohne Spiel mit Passung, durchdringt, und wobei jedes Ringsegment (32a, 32b, 32c, 32d) des zweiten Reibrings (31) mindestens zwei Gewindebohrungen (34) aufweist, wobei das erste Verbindungsmittel (18, 18a) und das zweite Verbindungsmittel (18, 18b) in den Gewindebohrungen (34) eingeschraubt sind.

12. Schienenrad (100) nach Anspruch 9 oder 10, **dadurch gekennzeichnet, dass** jedes Ringsegment (13a, 13b, 13c, 13d, 32a, 32b, 32c, 32d) des ersten Reibrings (11) und des zweiten Reibrings (31) genau eine Durchgangsöffnung (37), insbesondere eine Durchgangsbohrung (38), aufweist, wobei in der Durchgangsöffnung (37) jedes Ringsegments (13a, 13b, 13c, 13d, 32a, 32b, 32c, 32d) ein Verbindungsmittel (18, 18a, 18b) mit einer Spielpassung oder Passung angeordnet ist, wobei jedes Verbindungsmittel (18, 18a, 18b) ein Bohrloch (41) im Schienenrad mit Passung oder Spielpassung durchdringt und in einer Gewindebohrung (34) des jeweils gegenüberliegenden Ringsegments (13a, 13b, 13c, 13d, 32a, 32b, 32c, 32d) des jeweils gegenüberliegenden Reibrings (11, 31) eingeschraubt ist.

13. Schienenrad (100) nach einem der vorgenannten Ansprüche, **dadurch gekennzeichnet, dass** die Verbindungsmittel (18, 18a, 18b) einen Verschleißabschnitt (46) aufweisen, wobei ein axiales Ende (47) des Verschleißabschnitts (46) plan mit der Reibfläche (12) angeordnet ist und Teil der Reibfläche (12) ist, wobei bevorzugt der Verschleißabschnitt aus dem gleichen Material wie die Ringsegmente (13a, 13b, 13c, 13d, 32a, 32b, 32c, 32d), insbesondere wie die Reibfläche (12), besteht.

14. Bremsscheibe (10) für ein Schienenrad (100) nach einem der vorgenannten Ansprüche.

15. Ringsegment (13a, 13b, 13c, 13d, 32a, 32b, 32c, 32d) für eine Bremsscheibe (10) nach Anspruch 14.

## Claims

1. Rail wheel (100) for a rail vehicle comprising a brake disc (10), wherein the brake disc (10) comprises at least one friction ring (11, 31) with a friction surface (12), wherein the at least one friction ring (11, 31) comprises at least two ring segments (13a, 13b, 13c, 13d, 32a, 32b, 32c, 32d), wherein each ring segment (13a, 13b, 13c, 13d, 32a, 32b, 32c, 32d) comprises a first end face (19a, 19b, 19c, 19d) and a second end face (20a, 20b, 20c, 20d), wherein at least one guiding means (21, 21a, 21b) is arranged on the first end face (19a, 19b, 19c, 19d) of each ring segment (13a, 13b, 13c, 13d, 32a, 32b, 32c, 32d) and wherein at least one guiding means receptacle (23, 23a, 23b) is arranged in the second end face (20a, 20b, 20c, 20d) of each ring segment (13a, 13b, 13c, 13d, 32a, 32b, 32c, 32d), wherein each ring segment (13a, 13b, 13c, 13d, 32a, 32b, 32c, 32d) is arranged with the first end face (19a, 19b, 19c, 19d) on the second end face (20a, 20b, 20c, 20d) of an adjacent ring segment (13a, 13b, 13c, 13d, 32a, 32b, 32c, 32d) in such a way that the at least one guiding means (21, 21a, 21b) of each ring segment (13a, 13b, 13c, 13d, 32a, 32b, 32c, 32d) is arranged in the at least one guiding means receptacle (23, 23a, 23b) of the adjacent ring segment (13a, 13b, 13c, 13d, 32a, 32b, 32c, 32d), **characterised in that** the at least one guiding means (21, 21a, 21b) of each ring segment (13a, 13a, 13b, 13c, 13d, 32a, 32b, 32c, 32d) is fixedly arranged on the first end face (19a, 19b, 19c, 19d), and **in that** the at least one guiding means (21, 21a, 21b) of each ring segment (13a, 13b, 13c, 13d, 32a, 32b, 32c, 32d) is arranged with clearance in the at least one guiding means receptacle (23, 23a, 23b) of the second end face (20a, 20b, 20c, 20d) of the adjacent ring segment (13a, 13b, 13c, 13d, 32a, 32b, 32c, 32d).

2. Rail wheel (100) according to claim 1, **characterized in that** the at least one guiding means (21, 21a, 21b) of each ring segment (13a, 13b, 13c, 13d, 32a, 32b, 32c, 32d), in particular in the direction of the second end face (20a, 20b, 20c, 20d) of the adjacent ring segment (13a, 13b, 13c, 13d, 32a, 32b, 32c, 32d), protrudes from the first end face (19a, 19b, 19c, 19d) and/or projects from the first end face (19a, 19b, 19c, 19d).

3. Rail wheel (100) according to claim 1 or 2, **characterized in that** the at least one guiding means (21, 21a, 21b) is a pin (22, 22a, 22b) or a bolt or a cone or a spring or a rib, and/or **in that** the at least one guiding means (21, 21a, 21b) has a round, in particular circular, or polygonal, in particular rectangular, further in particular square, cross section.

4. Rail wheel (100) according to one of the preceding claims, **characterized in that** the first end face (19a, 19b, 19c, 19d) of each ring segment (13a, 13b, 13c, 13d, 32a, 32b, 32c, 32d) has at least one fastening receptacle (27, 27a, 27b), wherein the at least one guiding means (21, 21a, 21b) is fixedly arranged in the at least one fastening receptacle (27, 27a, 27b), wherein the at least one guiding means (21, 21a, 21b) is preferably arranged in the at least one fastening receptacle (27, 27a, 27b) integrally joined, in particular by welding or soldering or gluing, and/or in a form-locking manner, in particular with a latching connection or a feather key connection, and/or in a force-locking manner, in particular with a screw connection or a press fit.

5. Rail wheel (100) according to one of the preceding claims, **characterised in that** the at least one guiding means (21, 21a, 21b) is arranged in the at least one guiding means receptacle (23, 23a, 23b) with clearance in a circumferential direction (25) and/or an axial direction (30) and/or a radial direction (29) of the friction ring (11, 31).

6. Rail wheel (100) according to one of the preceding claims, **characterised in that** the at least one friction ring (11, 31) is connected to the rail wheel, in particular to a web (16) of the rail wheel, by connecting means (18, 18a, 18b), in particular by screws (17) or bolts.

7. Rail wheel (100) according to one of the preceding claims, **characterized in that** each ring segment (13a, 13b, 13c, 13d, 32a, 32b, 32c, 32d) has at least one first through-opening (37), in particular a first through-bore (38), wherein a first connecting means (18, 18a) is arranged with a clearance fit in the first through-opening (37) of each ring segment (13a, 13b, 13c, 13d, 32a, 32b, 32c, 32d), and/or **in that** each ring segment (13a, 13b, 13c, 13d, 32a, 32b, 32c, 32d) comprises at least two through openings (37, 39), in particular through bores (38, 40), wherein a second connecting means (18, 18b) is arranged with a fit in a second through opening (39) of each ring segment (13a, 13b, 13c, 13d, 32a, 32b, 32c, 32d).

8. Rail wheel (100) according to claim 7, **characterised in that** the rail wheel, in particular the web (16) of the rail wheel, for each ring segment (13a, 13b, 13c, 13d, 32a, 32b, 32c, 32d) has a first borehole (41) associated with the first through-opening (37) and/or a second borehole (42) associated with the second through-opening (39), wherein preferably the first connecting means (18a) is arranged in the first borehole (41) of the rail wheel and/or the second connecting means (18b) is arranged in the second borehole (42) of the rail wheel.

9. Rail wheel (100) according to one of the preceding claims, **characterised in that** the brake disc (10) comprises two friction rings (11, 31), namely a first friction ring (11) and a second friction ring (31).

10. Rail wheel (100) according to claim 9, **characterized in that** the first friction ring (11) and the second friction ring (31) are connected to the rail wheel, in particular to a web (16) of the rail wheel, by connecting means (18, 18a, 18b), in particular screws (17) or bolts, wherein the connecting means (18, 18a, 18b) are arranged in the boreholes (41, 42) of the rail wheel.

11. Rail wheel (100) according to claim 9 or 10, **characterized in that** each ring segment (13a, 13b, 13c, 13d) of the first friction ring (11) has at least one first through opening (37), in particular a first through bore (38), and at least one second through opening (37), in particular a second through bore (40), wherein in the first through-opening (37) of each ring segment (13a, 13b, 13c, 13d) of the first friction ring (11) a first connecting means (18, 18a) is arranged in a clearance fit or a fit and wherein in the second through-opening (39) of each ring segment (13a, 13b, 13c, 13d) of the first friction ring (11) a second connecting means (18, 18b) is arranged without clearance with a fit, wherein the first connecting means (18, 18a) penetrates a first bore hole (41) in the rail wheel associated with the first through opening (37), in particular in the web (16) of the rail wheel, preferably with clearance without fit, and wherein the second connecting means (18, 18b) penetrates a second bore hole (42) in the rail wheel associated with the second through opening (39), in particular the web (16) of the rail wheel, preferably without clearance with a fit, and wherein each ring segment (32a, 32b, 32c, 32d) of the second friction ring (31) has at least two threaded bores (34), wherein the first connecting means (18, 18a) and the second connecting means (18, 18b) are screwed into the threaded bores (34).

12. Rail wheel (100) according to claim 9 or 10, **characterised in that** each ring segment (13a, 13b, 13c, 13d, 32a, 32b, 32c, 32d) of the first friction ring (11) and of the second friction ring (31) has precisely one through-opening (37), in particular a through-bore (38), wherein in the through-opening (37) of each ring segment (13a, 13b, 13c, 13d, 32a, 32b, 32c, 32d) a connecting means (18, 18a, 18b) is arranged with a clearance fit or fit, wherein each connecting means (18, 18a, 18b) penetrates a bore hole (41) in the rail wheel with a fit or clearance fit and is screwed into a threaded bore (34) of the respectively opposite ring segment (13a, 13b, 13c, 13d, 32a, 32b, 32c, 32d) of the respectively opposite friction ring (11, 31).

13. Rail wheel (100) according to one of the preceding claims, **characterized in that** the connecting means (18, 18a, 18b) have a wear section (46), wherein an axial end (47) of the wear section (46) is arranged planar with the friction surface (12) and is part of the friction surface (12), wherein preferably the wear section is made of the same material as the ring segments (13a, 13b, 13c, 13d, 32a, 32b, 32c, 32d), in particular as the friction surface (12).

14. Brake disc (10) for a rail wheel (100) according to one of the preceding claims.

15. Ring segment (13a, 13b, 13c, 13d, 32a, 32b, 32c, 32d) for a brake disc (10) according to claim 14.

## Revendications

1. Roue ferroviaire (100) pour véhicule sur rails comprenant un disque de frein (10), sachant que le disque de frein (10) comprend au moins un anneau de friction (11, 31) avec une surface de friction (12), sachant que l'au moins un anneau de friction (11, 31) comprend au moins deux segments annulaires (13a, 13b, 13c, 13d, 32a, 32b, 32c, 32d), sachant que chaque segment annulaire (13a, 13b, 13c, 13d, 32a, 32b, 32c, 32d) comprend une première face avant (19a, 19b, 19c, 19d) et une deuxième face avant (20a, 20b, 20c, 20d), sachant que sur la première face avant (19a, 19b, 19c, 19d) de chaque segment annulaire (13a, 13b, 13c, 13d, 32a, 32b, 32c, 32d) est disposé au moins un moyen de guidage (21, 21a, 21b) et sachant que dans la deuxième face avant (20a, 20b, 20c, 20d) de chaque segment annulaire (13a, 13b, 13c, 13d, 32a, 32b, 32c, 32d) est disposé au moins un logement de moyen de guidage (23, 23a, 23b), sachant que chaque segment annulaire (13a, 13b, 13c, 13d, 32a, 32b, 32c, 32d) est disposé avec la première face avant (19a, 19b, 19c, 19d) sur la deuxième face avant (20a, 20b, 20c, 20d) d'un segment annulaire voisin (13a, 13b, 13c, 13d, 32a, 32b, 32c, 32d) de telle manière que l'au moins un moyen de guidage (21, 21a, 21b) de chaque segment annulaire (13a, 13b, 13c, 13d, 32a, 32b, 32c, 32d) est disposé dans l'au moins un logement de moyen de guidage (23, 23a, 23b) du segment annulaire voisin (13a, 13b, 13c, 13d, 32a, 32b, 32c, 32d), **caractérisée en ce que**
l'au moins un moyen de guidage (21, 21a, 21b) de chaque segment annulaire (13a, 13b, 13c, 13d, 32a, 32b, 32c, 32d) est fixement disposé sur la première face avant (19a, 19b, 19c, 19d) et **en ce que** l'au moins un moyen de guidage (21, 21a, 21b) de chaque segment annulaire (13a, 13b, 13c, 13d, 32a, 32b, 32c, 32d) est disposé avec jeu dans l'au moins un logement de moyen de guidage (23, 23a, 23b) de la deuxième face avant (20a, 20b, 20c, 20d) du segment annulaire voisin (13a, 13b, 13c, 13d, 32a, 32b, 32c, 32d).

2. Roue ferroviaire (100) selon la revendication 1, **caractérisée en ce que** l'au moins un moyen de guidage (21, 21a, 21b) de chaque segment annulaire (13a, 13b, 13c, 13d, 32a, 32b, 32c, 32d), en particulier en direction de la deuxième face avant (20a, 20b, 20c, 20d) du segment annulaire voisin (13a, 13b, 13c, 13d, 32a, 32b, 32c, 32d) fait saillie de la première face avant (19a, 19b, 19c, 19d) et/ou dépasse de la première face avant (19a, 19b, 19c, 19d).

3. Roue ferroviaire (100) selon la revendication 1 ou 2, **caractérisée en ce que** l'au moins un moyen de guidage (21, 21a, 21b) est une tige (22, 22a, 22b) ou un boulon ou un cône ou un ressort ou une nervure, et/ou **en ce que** l'au moins un moyen de guidage (21, 21a, 21b) comporte une section ronde, en particulier circulaire ou polygonale, en particulier rectangulaire, en particulier par ailleurs quadratique.

4. Roue ferroviaire (100) selon l'une quelconque des revendications précédentes, **caractérisée en ce que** la première face avant (19a, 19b, 19c, 19d) de chaque segment annulaire (13a, 13b, 13c, 13d, 32a, 32b, 32c, 32d) comporte au moins un logement de fixation (27, 27a, 27b), sachant que l'au moins un moyen de guidage (21, 21a, 21b) est fixement disposé dans l'au moins un logement de fixation (27, 27a, 27b), sachant que l'au moins un moyen de guidage (21, 21a, 21b) est disposé, de préférence par conformité de matière dans l'au moins un logement de fixation (27, 27a, 27b), en particulier par soudage ou brasage ou collage, et/ou par conformité de forme, en particulier avec une liaison à cran ou une liaison à ressort d'ajustage, et/ou par conformité de force, en particulier avec une liaison à vis ou un ajustage serré.

5. Roue ferroviaire (100) selon l'une quelconque des revendications précédentes, **caractérisée en ce que** l'au moins un moyen de guidage (21, 21a, 21b) est disposé avec jeu dans l'au moins un logement de moyen de guidage (23, 23a, 23b) dans une direction périphérique (25) et/ou une direction axiale (30) et/ou une direction radiale (29) de l'anneau de friction (11, 31).

6. Roue ferroviaire (100) selon l'une quelconque des revendications précédentes, **caractérisée en ce que** l'au moins un anneau de friction (11, 31) est relié avec des moyens de liaison (18, 18a, 18b), en particulier avec des vis (17) ou des boulons, à la roue ferroviaire, en particulier à une nervure (16) de la roue ferroviaire.

7. Roue ferroviaire (100) selon l'une quelconque des revendications précédentes, **caractérisée en ce que** chaque segment annulaire (13a, 13b, 13c, 13d, 32a, 32b, 32c, 32d) comporte au moins une première ouverture de passage (37), en particulier un premier perçage de passage (38), sachant que dans la première ouverture de passage (37) de chaque segment annulaire (13a, 13b, 13c, 13d, 32a, 32b, 32c, 32d) est disposé un premier moyen de liaison (18, 18a) avec un ajustage à jeu, et/ou **en ce que** chaque segment annulaire (13a, 13b, 13c, 13d, 32a, 32b, 32c, 32d) comprend au moins deux ouvertures de passage (37, 39), en particulier des perçages de passage (38, 40), sachant que dans la deuxième ouverture de passage (39) de chaque segment annulaire (13a, 13b, 13c, 13d, 32a, 32b, 32c, 32d) est disposé un deuxième moyen de liaison (18, 18b) avec ajustage.

8. Roue ferroviaire (100) selon la revendication 7, **caractérisée en ce que** la roue ferroviaire, en particulier la nervure (16) de la roue ferroviaire comporte pour chaque segment annulaire (13a, 13b, 13c, 13d, 32a, 32b, 32c, 32d) un premier trou de perçage (41) attribué à la première ouverture de passage (37) et/ou un deuxième trou de perçage (42) attribué à la deuxième ouverture de passage (39), sachant de préférence que le premier moyen de liaison (18a) est disposé dans le premier trou de perçage (41) de la roue ferroviaire et/ou **en ce que** le deuxième moyen de liaison (18b) est disposé dans le deuxième trou de perçage (42) de la roue ferroviaire.

9. Roue ferroviaire (100) selon l'une quelconque des revendications précédentes, **caractérisée en ce que** le disque de frein (10) comprend deux anneaux de friction (11, 31), à savoir un premier anneau de friction (11) et un deuxième anneau de friction (31).

10. Roue ferroviaire (100) selon la revendication 9, **caractérisée en ce que** le premier anneau de friction (11) et le deuxième anneau de friction (31) sont reliés avec des moyens de liaison (18, 18a, 18b), en particulier des vis (17) ou des boulons, à la roue ferroviaire, en particulier à une nervure (16) de la roue ferroviaire, sachant que les moyens de liaison (18, 18a, 18b) sont disposés dans les trous de perçage (41, 42) de la roue ferroviaire.

11. Roue ferroviaire (100) selon la revendication 9 ou 10, **caractérisée en ce que** chaque segment annulaire (13a, 13b, 13c, 13d) du premier anneau de friction (11) comporte au moins une première ouverture de passage (37), en particulier un premier perçage de passage (38) et au moins une deuxième ouverture de passage (37), en particulier un deuxième perçage de passage (40), sachant que dans la première ouverture de passage (37) de chaque segment annulaire (13a, 13b, 13c, 13d) du premier anneau de friction (11) est disposé un premier moyen de liaison (18, 18a) dans un ajustage avec jeu ou un ajustage et sachant que dans la deuxième ouverture de passage (39) de chaque segment annulaire (13a, 13b, 13c, 13d) du premier anneau de friction (11) est disposé un deuxième moyen de liaison (18, 18b) sans jeu avec ajustage, sachant que le premier moyen de liaison (18, 18a) traverse un premier trou de perçage (41) attribué à la première ouverture de passage (37) dans la roue ferroviaire, en particulier dans la nervure (16) de la roue ferroviaire, de préférence avec jeu sans ajustage et sachant que le deuxième moyen de liaison (18, 18b) traverse un deuxième trou de perçage (42) attribué à la deuxième ouverture de passage (39), dans la roue ferroviaire, en particulier dans la nervure (16) de la roue ferroviaire, de préférence sans jeu avec ajustage et sachant que chaque segment annulaire (32a, 32b, 32c, 32d) du deuxième anneau de friction (31) comporte au moins deux trous filetés (34), sachant que le premier moyen de liaison (18, 18a) et le deuxième moyen de liaison (18, 18b) sont vissés dans les trous filetés (34).

12. Roue ferroviaire (100) selon la revendication 9 ou 10, **caractérisée en ce que** chaque segment annulaire (13a, 13b, 13c, 13d, 32a, 32b, 32c, 32d) du premier anneau de friction (11) et du deuxième anneau de friction (31) comporte exactement une ouverture de passage (37), en particulier un perçage de passage(38), sachant que dans l'ouverture de passage (37) de chaque segment annulaire (13a, 13b, 13c, 13d, 32a, 32b, 32c, 32d) est disposé un moyen de liaison (18, 18a, 18b) avec un ajustage avec jeu ou un ajustage, sachant que chaque moyen de liaison (18, 18a, 18b) traverse un trou de perçage (41) dans la roue ferroviaire avec ajustage ou ajustage à jeu et est vissé dans un trou fileté (34) du segment annulaire respectif opposé (13a, 13b, 13c, 13d, 32a, 32b, 32c, 32d) de l'anneau de friction respectif opposé (11, 31).

13. Roue ferroviaire (100) selon l'une quelconque des revendications précédentes, **caractérisée en ce que** les moyens de liaison (18, 18a, 18b) comportent une section d'usure (46), sachant qu'une extrémité axiale (47) de la section d'usure (46) est disposée en plan avec la surface de friction (12) et fait partie de la surface de friction (12), sachant de préférence que la section d'usure est composée du même matériau que les segments annulaires (13a, 13b, 13c, 13d, 32a, 32b, 32c, 32d), en particulier que la surface de friction (12).

14. Disque de frein (10) pour une roue ferroviaire (100) selon l'une quelconque des revendications précédentes.

15. Segment annulaire (13a, 13b, 13c, 13d, 32a, 32b, 32c, 32d) pour un disque de frein (10) selon la revendication 14.
